# EUROPÄISCHE PATENTANMELDUNG

(11) **EP 4 649 797 A1**
(43) Veröffentlichungstag der Anmeldung: **19.11.2025**
(21) Anmeldenummer: 25177024.4
(22) Anmeldetag: 16.05.2025
(51) Int. Cl.: A01B 69/04, B60K 35/10

(54) **STEUERVORRICHTUNG UND FAHRZEUGSTEUERSYSTEM MIT GATEWAY**

(30) Priorität: 17.05.2024 DE 102024113986
(71) Anmelder: Mulag Fahrzeugwerk Heinz Wössner GmbH u. Co. KG, 77728 Oppenau (DE)
(72) Erfinder: WÖSSNER, Holger, 77728 Oppenau (DE)
(74) Vertreter: Weickmann & Weickmann PartmbB

(57) **Zusammenfassung**

Die vorliegende Erfindung betrifft eine Steuervorrichtung (10) zum Steuern eines mit einem Arbeitsfahrzeug (120) gekoppelten Arbeitsgerätes (110), umfassend einen Basiskörper (16) mit einem Befestigungsabschnitt (24), welcher dazu eingerichtet ist, die Steuervorrichtung (10; 10c, 10d) an einem Fahrzeugelement (26) in einem Innenraum eines Arbeitsfahrzeugs (120) zu befestigen, einen Steuerhebel (12) zur manuellen Betätigung durch eine Bedienperson; ein Gelenk (14), an welchem der Steuerhebel (12) um zwei zueinander senkrecht stehende Schwenkachsen relativ zu dem Basiskörper stufenlos schwenkbar gelagert ist; und eine Betätigungserfassungseinrichtung, welche dafür eingerichtet ist, eine Schwenkbewegung des Steuerhebels (12) zu erfassen, wobei die Steuervorrichtung (10) dafür eingerichtet ist, auf Basis einer Ausgabe der Betätigungserfassungseinrichtung spezifische Steuersignale zu erzeugen, und wobei die Steuervorrichtung (10) eine Signalschnittstelle (20) zur Übertragung der Steuersignale an ein externes Steuergerät (130) aufweist, wobei die Steuervorrichtung (10) ein Gateway (50) mit einem Signaleingang und einem Signalausgang umfasst, wobei das Gateway (50) dafür eingerichtet ist, an dem Signaleingang Signale von der Betätigungserfassungseinrichtung zu empfangen und an dem Signalausgang erste Steuersignale gemäß einem ersten Datenübertragungsformat auszugeben, und wobei das Gateway (50) ferner dafür eingerichtet ist, gleichzeitig mit Ausgabe der ersten Steuersignale oder/und nach einer Konfigurationsänderung des Gateways (50) zweite Steuersignale gemäß einem zweiten Datenübertragungsformat an dem Signalausgang auszugeben. Ferner betrifft die vorliegende Erfindung ein Fahrzeugsteuersystem (100), umfassend eine Steuervorrichtung (10).

## Beschreibung

Die vorliegende Erfindung betrifft eine Steuervorrichtung zum Steuern eines mit einem Arbeitsfahrzeug gekoppelten Arbeitsgeräts, umfassend einen Basiskörper zur Befestigung in einem Innenraum eines Fahrzeugs und einen Steuerhebel zur manuellen Betätigung durch eine Bedienperson, wobei die Steuervorrichtung eine Signalschnittstelle aufweist, um Steuersignale nach Maßgabe einer Betätigung des Steuerhebels an ein externes Steuergerät zu übertragen. Ferner betrifft die Erfindung ein Fahrzeugsteuersystem für ein Fahrzeug mit daran angekoppeltem Arbeitsgerät, wobei das Fahrzeugsteuersystem eine Steuervorrichtung der oben genannten Art aufweist.

Steuervorrichtungen und Fahrzeugsteuersysteme der oben beschriebenen Art sind insbesondere für den Einsatz in auf Rädern, Schienen oder Ketten fahrbaren Arbeitsfahrzeugen bekannt und steuern an dem Arbeitsfahrzeug gekoppelte Arbeitsgeräte, beispielsweise Mähwerkzeuge, Reinigungswerkzeuge, Streuwerkzeuge oder andere Arbeitsgeräte, die während der Fahrt des Fahrzeugs betrieben werden, insbesondere während ein im Fahrzeug sitzender Fahrer das Fahrzeug steuert. Beispiele für derartige Arbeitsfahrzeuge sind Mähfahrzeuge mit einem über einen Auslegerarm am Mähfahrzeug gekoppelten Mähgerät zum Mähen eines Randstreifens neben einer Fahrbahn, oder Waschfahrzeuge mit daran gekoppelten Waschwerkzeugen zum Waschen der Wände eines Tunnels oder einer Leitplanke während der Fortbewegung des Fahrzeugs. Zur Steuerung der Arbeitsgeräte kommt üblicherweise ein im Innenraum des Fahrzeugs in Reichweite des Fahrers oder eines anderen Insassens des Fahrzeugs angebrachter Steuerhebel zum Einsatz, dessen Bewegungen in Steuersignale umgewandelt und an ein Steuergerät des Arbeitsgeräts übertragen werden. Unterstützt wird die Steuerung des Arbeitsgeräts darüber hinaus oft durch weitere Bedienelemente, Hebel, Schalter, etc., welche am Armaturenbrett des Fahrzeugs angeordnet sind.

Arbeitsgeräte sind in der Regel komplexe Werkzeuge mit einer Vielzahl an steuerbaren Elementen, beispielsweise Arbeitszylindern, Teleskopiereinheiten und Stellmotoren, und erfordern dementsprechend eine vielschichtige Ansteuerung, z.B. zur Steuerung von Winkelpositionen zwischen Gelenkelementen von Auslegerarmen, zur Einstellung verschiedener Betriebsmodi des Arbeitsgeräts selbst, beispielsweise Drehgeschwindigkeiten, Anstellwinkel, Materialzufuhr oder Entlüftung und vieles mehr. Die Steuervorrichtung des Arbeitsgeräts muss dementsprechend einen hohen Funktionsumfang aufweisen und sollte gleichzeitig einfach, zuverlässig und mit hoher Betriebssicherheit bedienbar sein.

**In** den letzten Jahren hat sich die Vielzahl und Komplexität der zur Verfügung stehenden Arbeitsgeräte stark erhöht. Eine Reihe hochspezialisierter Arbeitsgeräte für spezifische Anwendungsgebiete wurde von einer Vielzahl von Herstellern entwickelt, um Pflege und Erhaltungsmaßnahmen des öffentlichen Raums mit weiter verbesserter Effizienz und höherer Arbeitssicherheit zu erledigen. Es ist somit ein hoher Bedarf entstanden, an vorhandene Arbeitsfahrzeuge flexibel unterschiedliche Arbeitsgeräte anzukoppeln, insbesondere Arbeitsgeräte unterschiedlicher Hersteller. Dies erfordert jedoch in der Regel einen aufwendigen Umbau der Steuerelektronik des Fahrzeugs sowie der Bedienelemente zum Ansteuern des Arbeitsgeräts, um die Steuervorrichtung und die Signalübertragung an die spezifischen Signalformate der jeweiligen Arbeitsgeräte anzupassen. Zwar sind Versuche vorgenommen worden, fahrzeugseitig eine universelle Aufbauherstellerschnittstelle bereitzustellen, die einen gewissen Standard für die Datenübertragung zu verschiedenen Arbeitsgeräten definiert, um mit einer derselben, im Fahrzeug fest verbauten Steuervorrichtung sowie der fahrzeuginternen nativen Steuerelektronik verschiedene Arbeitsgeräte, insbesondere Arbeitsgeräte verschiedener Hersteller, anzusteuern. Jedoch sind aufgrund der Standardisierung die über eine solche Aufbauherstellerschnittstelle ansteuerbaren Typen und Funktionen von Arbeitsgeräten stark limitiert, sodass die ansteuerbaren Arbeitsgeräte auf relativ einfache, herkömmliche Geräte begrenzt sind. Zudem ist der Funktionsumfang der im Fahrzeug verbauten Steuervorrichtung begrenzt, sodass durch diese Steuervorrichtung sowie ggf. weitere Bedienelemente am Armaturenbrett des Fahrzeugs nur eine begrenzte Auswahl an Funktionen bekannter Arbeitsgeräte ansteuerbar ist. Weder stehen ausreichend Bedienfunktionen für komplexere Arbeitsgeräte zur Verfügung noch lässt sich die Art der Bedienung an neu entwickelte Arbeitsgeräte anpassen.

Vor diesem Hintergrund ist es Aufgabe der vorliegenden Erfindung, eine Steuervorrichtung zum Steuern eines Arbeitsgeräts sowie ein Fahrzeugsteuersystem für ein Arbeitsfahrzeug bereitzustellen, welche eine Erweiterung des Funktionsumfangs und eine flexible Ansteuerung unterschiedlicher Arbeitsgeräte erlaubt.

Gemäß einem ersten Aspekt der Erfindung wird diese Aufgabe gelöst durch eine Steuervorrichtung zum Steuern eines mit einem Arbeitsfahrzeug gekoppelten Arbeitsgerätes, umfassend: einen Basiskörper mit einem Befestigungsabschnitt, welcher dazu eingerichtet ist, die Steuervorrichtung an einem Fahrzeugelement in einem Innenraum eines Arbeitsfahrzeugs zu befestigen; einen Steuerhebel zur manuellen Betätigung durch eine Bedienperson; ein Gelenk, an welchem der Steuerhebel um zwei zueinander senkrecht stehende Schwenkachsen relativ zu dem Basiskörper stufenlos schwenkbar gelagert ist; und eine Betätigungserfassungseinrichtung, welche dafür eingerichtet ist, eine Schwenkbewegung des Steuerhebels zu erfassen, wobei die Steuervorrichtung dafür eingerichtet ist, auf Basis einer Ausgabe der Betätigungserfassungseinrichtung spezifische Steuersignale zu erzeugen, wobei der die Steuervorrichtung eine Signalschnittstelle zur Übertragung der Steuersignale an ein externes Steuergerät aufweist, wobei die Steuervorrichtung ein Gateway mit einem Signaleingang und einem Signalausgang umfasst, wobei das Gateway dafür eingerichtet ist, an dem Signaleingang Signale von der Betätigungserfassungseinrichtung zu empfangen und an dem Signalausgang erste Steuersignale gemäß einem ersten Datenübertragungsformat auszugeben, und wobei das Gateway ferner dafür eingerichtet ist, gleichzeitig mit Ausgabe der ersten Steuersignale oder/und nach einer Konfigurationsänderung des Gateways, zweite Steuersignale gemäß einem zweiten Datenübertragungsformat an dem Signalausgang auszugeben.

Nach einem wichtigen Merkmal der vorliegenden Erfindung weist die Steuervorrichtung ein Gateway auf, welches sowohl Steuersignale gemäß einem ersten Datenübertragungsformat als auch Steuersignale gemäß einem zweiten Datenübertragungsformat ausgeben kann, wobei das Gateway entweder dafür eingerichtet ist, Steuersignale beider Datenübertragungsformate gleichzeitig auszugeben, oder das Gateway derart eingerichtet ist, Steuersignale gemäß einem ersten Datenübertragungsformat auszugeben und nach einer Konfigurationsänderung des Gateways zweite Steuersignale gemäß einem zweiten Datenübertragungsformat auszugeben. Ein und dieselbe Steuervorrichtung kann somit gleichzeitig oder durch eine einfache Umkonfiguration nacheinander für die Signalausgabe gemäß unterschiedlicher Datenübertragungsformate verwendet werden. Im Ergebnis kann ein und dieselbe Steuervorrichtung unterschiedliche Arbeitsgeräte ansteuern, insbesondere unterschiedliche Typen von externen Arbeitsgerät-Steuergeräten ansteuern, beispielsweise unterschiedliche Arbeitsgeräte-Steuergeräte unterschiedlicher Hersteller, die für die Datenkommunikation unterschiedliche Datenübertragungsformate verwenden. Zudem lässt sich der Funktionsumfang der erfindungsgemäßen Steuervorrichtung durch ein solches Gateway flexibel erweitern, da zusätzlich zum ersten Datenübertragungsformat beispielsweise einem herkömmlichen, fahrzeugseitig verwendeten Datenübertragungsformat, ein zweites Datenübertragungsformat bereitgestellt wird, mit welchem sich beliebige neuere Arbeitsgeräte mit erweitertem Funktionsumfang, insbesondere Arbeitsgeräte anderer Hersteller als dem Hersteller des Arbeitsfahrzeugs, angesteuert werden können.

Datenübertragungsformate im Sinne der vorliegenden Erfindung können dabei sowohl physische Merkmale, wie zum Beispiel die Anzahl, Anordnung, Form und Beschaffenheit von Leitern, Polen, elektrischen Verbindungen, Steckverbindungen, etc., die die Beschaffenheit als drahtlose (Funk-)Verbindung oder als drahtgebundene Verbindung, die Art und Konfiguration der drahtlosen Verbindung, usw., sowie auch logische Merkmale, wie bestimmte Datenübertragungsprotokolle, Signalcodierungen oder andere Kommunikationsregeln umfassen, wobei zwei Datenübertragungsformate als unterschiedlich angesehen werden, wenn sie sich in wenigstens einem physischen oder logischen Merkmal voneinander unterscheiden, jedenfalls aber dann, wenn die Formate zueinander inkompatibel sind oder wenn beim Übergang von einem Datenübertragungsformat zum anderen irgendeine Art der Formatumwandlung erforderlich ist, um eine zuverlässige Informationsübertragung sicherzustellen. Üblicherweise können beispielsweise unterschiedliche Hersteller unterschiedliche Steuergeräte zur Ansteuerung der von ihnen hergestellten Arbeitsgeräte bereitstellen, wobei die Steuergeräte mit unterschiedlichen Datenübertragungsformaten arbeiten, sowohl hinsichtlich der Ansteuerung der Steuergeräte durch eine manuell zu bedienende Steuervorrichtung, als auch hinsichtlich der Kommunikation zwischen dem Steuergerät und dem Arbeitsgerät.

Eine Konfigurationsänderung des Gateways kann beispielsweise eine Umprogrammierung eines elektronischen Schaltkreises des Gateways umfassen, beispielsweise das Einspielen einer für das erste oder/und zweite Datenübertragungsformat spezifischen Software in das Gateway durch einen Computer. Alternativ kann die Konfigurationsänderung des Gateways durch einen manuell zu betätigenden Schalter am Gateway oder an der Steuervorrichtung erfolgen, beispielsweise einen Datenübertragungsformat-Wahlschalter. In einer weiteren Alternative kann das Gateway dazu eingerichtet sein, zwischen verschiedenen Datenübertragungsformaten automatisch umzuschalten, beispielsweise in Reaktion auf ein Koppeln des Gateways mit einem externen Steuergerät, welches ein bestimmtes Datenübertragungsformat verwendet, insbesondere einem Arbeitsgeräte-Steuergerät oder einem Fahrzeugsteuergerät.

In einer bevorzugten Ausführungsform der Erfindung weist die Steuervorrichtung eine erste Signalschnittstelle zur Übertragung der ersten Steuersignale und eine von der ersten Signalschnittstelle separate zweite Signalschnittstelle zur Übertragung der zweiten Steuersignale auf. Die Schnittstellen können dann individuell an verschiedene Technologien oder Standards angepasst werden, die durch jeweilige Arbeitsgeräte-Hersteller verwendet werden. Insbesondere kann vorgesehen sein, dass die erste Signalschnittstelle und die zweite Signalschnittstelle voneinander unterschiedliche physische Merkmale aufweisen oder/und unterschiedliche logische Merkmale aufweisen.

Unter einer Schnittstelle wird hierin eine definierte Verbindung zwischen zwei oder mehreren Systemen, Geräten oder Komponenten verstanden, die den Austausch von Daten beziehungsweise Informationen ermöglicht. Sie stellt die physischen und logischen Regeln und Protokolle bereit, die für die Kommunikation notwendig sind. Schnittstellen können sowohl hardware- als auch softwarebasiert sein und können spezifische Standards und Normen umfassen, um die Kompatibilität und Funktionalität der miteinander verbundenen Systeme, Geräte oder Komponenten sicherzustellen. Schnittstellen können dementsprechend physische und logische Merkmale aufweisen. Physische Merkmale, können insbesondere die physische Verbindung (die mechanischen und elektrischen Eigenschaften der Verbindung, z. B. Stecker, Kabeltypen) betreffen. Logische Merkmale können insbesondere die verwendeten Protokolle (Regel und Verfahren, die den Datenaustausch regeln), die verwendeten Datenformate (Struktur und Organisation der ausgetauschten Daten, insbesondere Datenformate, Datenbankformate, Auszeichnungssprachen etc.) und die funktionalen Aspekte, insbesondere der spezifischen Funktionen und Dienste, die die Schnittstelle unterstützt (z. B. Datenübertragung, Steuerbefehle) betreffen. Zwei Schnittstellen sollen dementsprechend voneinander separat sein, wenn sie hinsichtlich ihrer physischen Verbindung voneinander separat oder/und voneinander verschieden bereitgestellt sind. Zwei Schnittstellen sollen voneinander verschieden sein, voneinander unterschiedliche physische Merkmale aufweisen oder/und unterschiedliche logische Merkmale aufweisen.

Die erste Signalschnittstelle oder/und die zweite Signalschnittstelle kann eine Steckverbindung zum Anschluss eines Datenkabels aufweisen. Auf diese Weise kann ein schneller und zuverlässiger Anschluss an ein externes Steuergerät unter Verwendung eines Datenkabels mit dem geforderten Datenübertragungsformat erfolgen. Das Datenkabel kann insbesondere unabhängig von einer im Fahrzeug verbauten Signalführung und unabhängig von einem von dem Fahrzeug ursprünglich unterstützen Datenübertagungsformat arbeiten.

In einer weiteren Ausführungsform der Erfindung kann die erste Signalschnittstelle oder/und die zweite Signalschnittstelle mindestens eine in den Befestigungsabschnitt integrierte Datenleitung umfassen, so dass durch Befestigen der Steuervorrichtung an einem Fahrzeugelement in einem Innenraum eines Arbeitsfahrzeugs eine elektrische Kopplung zwischen der Steuervorrichtung und dem Arbeitsfahrzeug herstellbar ist. Auf diese Weise kann die Steuervorrichtung besonders zuverlässig und ohne separate Kabelführung angeschlossen werden, insbesondere mit Signalleitungen der im Fahrzeug integrierten Elektronik verbunden und an ein im Fahrzeug integriertes Fahrzeugsteuergerät angeschlossen werden. In Betracht kommt insbesondere die Befestigung der Steuervorrichtung an einer Armschiene (d.h. Armstütze oder Armlehne) des Arbeitsfahrzeugs, so dass die Steuervorrichtung durch einen Fahrzeuginsassen gut erreichbar ist und die Signalleitungen gleichzeitig unauffällig über die Armschiene in das Fahrzeug geführt werden können.

Mit besonderem Vorteil kann dann die Steuervorrichtung insbesondere eine erste, von dem Befestigungsabschnitt beabstandete Signalschnittstelle für die Kommunikation mit einem Arbeitsgeräte-Steuergeräts auf Basis eines ersten Datenübertragungsformats und eine zweite Signalschnittstelle mit in den Befestigungsabschnitt integrierter Datenleitung für die Kommunikation mit einem in das Arbeitsfahrzeug integrierten Fahrzeugsteuergerät auf Basis eines von dem ersten Datenübertragungsformat verschiedenen zweiten Datenübertragungsformats umfassen. Beide Signalschnittstellen sind dann vorzugsweise mit dem Ausgang des Gateways verbunden, wobei der Ausgang des Gateway hierfür zwei separate Ausgangsabschnitte aufweisen kann.

In einer Variante der Erfindung kann die Steuervorrichtung eine Signalschnittstelle aufweisen und dafür eingerichtet sein, die ersten Steuersignale auf Basis des ersten Datenübertragungsformats und die zweiten Steuersignale auf Basis des zweiten Datenübertragungsformats über dieselbe Schnittstelle auszugeben. Diese Variante kommt insbesondere dann in Betracht, wenn sich die erste und die zweite Schnittstelle nur durch ihre logischen Merkmale voneinander unterscheiden und das Gateway zwischen den beiden Datenübertragungsformaten umschaltbar beziehungsweise umkonfigurierbar ist.

In Ausführungsformen der Erfindung kann die Schnittstelle oder können mehrere oder alle der Schnittstellen eine Standardschnittstelle nach einem Industriestandard sein, beispielsweise eine M12-Schnittstelle oder eine USB-Schnittstelle.

In weiteren vorteilhaften Ausführungsformen der Erfindung unterstützt die Steuervorrichtung nicht nur zwei verschiedene Datenübertragungsformate, sondern drei oder mehr verschiedene Datenübertragungsformate. Insbesondere kann das Gateway dafür eingerichtet sein, gleichzeitig oder nach einer Umkonfiguration drei oder mehrere verschiedene Steuersignale mit jeweils unterschiedlichen Datenübertragungsformaten auszugeben. Hierfür kann die Steuervorrichtung drei oder mehr verschiedene Schnittstellen aufweisen. In einer weiteren vorteilhaften Variante können die verschiedenen Datenübertragungsformate durch ein und dieselbe Schnittstelle bereitgestellt werden, beispielsweise durch eine Standardschnittstelle gemäß einem Industriestandard, beispielsweise M12 oder USB. Es lassen sich dann grundsätzlich eine große Vielzahl von unterschiedlichen Datenübertragungsformaten durch ein und dasselbe Gateway unterstützen, insbesondere durch entsprechende Umprogrammierung oder Umschaltung des Gateways.

Nachfolgend werden weitere vorteilhafte Merkmale sowie Eigenschaften der Erfindung beschrieben. So ist der Steuerhebel ist über das Gelenk schwenkbar mit dem Basiskörper der Steuervorrichtung verbunden und um die beiden Schwenkachsen schwenkbar. Dabei erstrecken sich die beiden Schwenkachsen senkrecht zueinander horizontal, während der Steuerhebel in seiner Haupterstreckungsrichtung im Wesentlichen vertikal ausgerichtet ist. Optional weist der Steuerhebel entlang seiner Haupterstreckungsrichtung eine Krümmung auf, wodurch sich der Steuerhebel ausgehend von seinem Ansatzpunkt am Gelenk entlang seiner Haupterstreckungsrichtung von der Bedienperson weg erstreckt. Durch die Krümmung liegt der Steuerhebel zum einen bequem in der Hand der Bedienperson und zum anderen wird dadurch das Erreichen der Bedienelemente auf dem Steuerhebel, insbesondere für den Daumen der Bedienperson, vereinfacht.

An dieser Stelle sei exemplarisch auf die EP 3 115 863 A2 verweisen, welche ebenfalls von der vorliegenden Anmelderin stammt und ein Ausführungsbeispiel im Hinblick auf die Ausgestaltung und Handhabung einer Steuervorrichtung mit Steuerhebel veranschaulicht, wobei dieses Ausführungsbeispiel jedoch nicht als einschränkend für die vorliegende Erfindung auszulegen ist.

Durch das Schwenken des Steuerhebels sowie das Betätigen der Bedienelemente werden spezifische Steuersignale erzeugt, welche über eine Verbindungsschnittstelle zwischen Steuervorrichtung und Arbeitsgerät das präzise Steuern des Arbeitsgerätes ermöglichen. Dadurch wird insbesondere eine hohe Funktionalität der Steuervorrichtung erreicht. Der Steuerhebel an sich sowie die daran ausgebildeten Bedienelemente stellen jeweils eigenständige Steuerelemente dar, wobei vorzugsweise jedem Steuerelement eine Funktion zum Steuern des Arbeitsgerätes zugewiesen ist, d.h. jedes Steuerelement ein spezifisches Steuersignal erzeugen kann. So kann beispielsweise das Schwenken des Steuerhebels die Stellelemente eines Mähgerätes ansteuern, um das Mähgerät relativ zu dem Arbeitsfahrzeug ein- bzw. auszufahren.

Der Befestigungsabschnitt der Steuervorrichtung, über welchen die Steuervorrichtung im Innenraum eines Arbeitsfahrzeugs befestigbar ist, ist dazu eingerichtet, eine lösbare Verbindung bereitzustellen, sodass die Steuervorrichtung problemlos aus dem Arbeitsfahrzeug entfernt werden kann, beispielsweise um diese zu warten. Die Verbindung kann über eine Steck-, Schraubverbindung oder anderweitig gängige, lösbare Verbindungsarten erfolgen.

Optional weist die Steuervorrichtung eine Höhe von wenigstens 200 mm, vorzugsweise wenigstens 230 mm, besonders bevorzugt wenigstens 250 mm, auf. Die Höhe der Steuervorrichtung erstreckt sich dabei vom Boden des Basiskörpers bis zum im ungeschwenkten Zustand höchsten Punkt des Steuerhebels an dessen Oberseite. Der Steuerhebel kann dabei mindestens die Hälfte der Gesamthöhe der Steuervorrichtung beanspruchen. Eine derart hohe Steuervorrichtung weist insbesondere entlang der Haupterstreckungsrichtung des Steuerhebels ausreichend Platz zur Anordnung der Bedienelemente auf, sodass eine hohe Funktionalität der Steuervorrichtung gewährleistet ist und der Steuerhebel gleichzeitig ergonomisch ausgebildet sein kann, d.h. für die Bedienperson bequem zu ergreifen ist. Insbesondere kann die Bedienperson seine Hand derart an dem Steuerhebel platzieren, dass seine Hand relativ zu seinem Arm nicht abgewinkelt werden muss. Dadurch kann die Belastung der Hand sowie des Handgelenks während der Benutzung der Steuervorrichtung verringert und das Auftreten von Ermüdungserscheinungen reduziert werden. Darüber hinaus ist bei einer Steuervorrichtung mit den entsprechenden Höhenabmessungen sichergestellt, dass auch Bedienpersonen mit besonders großen Händen ausreichend Platz am Steuerhebel vorfinden, um diesen mit der gesamten Hand umschließen zu können.

In einer bevorzugten Ausführungsform der erfindungsgemäßen Steuervorrichtung kann der Basiskörper an einer Außenseite davon eine Signalschnittstelle aufweisen, welcher selbst im befestigten Zustand der Steuervorrichtung zugänglich ist, und welcher dazu eingerichtet ist, die erzeugten spezifischen Steuersignale über eine physische Übertragungseinheit an ein Steuergerät des Arbeitsgerätes zu übertragen. Dadurch, dass die Signalschnittstelle auch im befestigten Zustand, d.h. in einem Zustand, in welchem die Steuervorrichtung über deren Befestigungsabschnitt in dem Innenraum eines Arbeitsfahrzeugs befestigt ist, zugänglich ist, kann dieser jederzeit überprüft und gegebenenfalls manipuliert werden, ohne dass die Steuervorrichtung dazu aus ihrer Befestigung gelöst werden muss.

Bei der physischen Übertragungseinheit zur Übertragung der Steuersignale kann es sich insbesondere um ein Datenkabel handeln, welches eine verzögerungs- und verlustfreie Übertragung der Steuersignale an das Arbeitsgerät gewährleistet. Die Signalschnittstelle und die Übertragungseinheit können ferner dafür eingerichtet sein, die Steuervorrichtung mit Strom zu versorgen. Die Übertragungseinheit kann hierzu insbesondere zwei Kabel oder ein Hybridkabel zur Übertragung von Daten sowie zur Bereitstellung elektrischer Versorgungleistung umfassen.

Alternativ können der Befestigungsabschnitt des Basiskörpers und das Arbeitsfahrzeug, insbesondere eine Armschiene des Arbeitsfahrzeugs, dafür eingerichtet sein, zusätzlich zur mechanischen Verbindung der Steuervorrichtung mit dem Innenraum des Arbeitsfahrzeugs, insbesondere mit der Armschiene des Arbeitsfahrzeugs, eine elektrische Kopplung zur Übertragung von Daten zwischen der Steuervorrichtung und einem Steuergerät des Arbeitsgerätes oder/und eine elektrische Stromversorgung für die Steuervorrichtung durch ein Bordnetz des Arbeitsfahrzeugs bereitzustellen. Hierfür können Datenleitungen oder/und Stromversorgungsleitungen in den Befestigungsabschnitt oder/und in das Arbeitsfahrzeug, insbesondere in die Armschiene, integriert sein, so dass durch mechanisches Anbringen der Steuervorrichtung im Innenraum des Arbeitsfahrzeugs, insbesondere an der Armschiene, eine elektrische Kopplung zwischen der Steuervorrichtung und dem Arbeitsfahrzeugs bewirkt wird.

Um die laterale Kollisionsgefahr der Steuervorrichtung mit anderweitigen Fahrzeugkomponenten, insbesondere dem Lenkrad, im Innenraum eines Arbeitsfahrzeugs zu reduzieren, jedoch weiterhin ausreichend Fläche zur Anordnung der Steuerelemente an der Steuervorrichtung zu gewährleisten, werden vorzugsweise sowohl die Breite als auch die Tiefe der Steuervorrichtung auf einen sinnvollen Bereich eingeschränkt. Daher kann die Steuervorrichtung in einer weiteren Ausführungsform eine Breite zwischen 120 mm und 150 mm, vorzugsweise zwischen 130 mm und 145 mm, besonders bevorzugt zwischen 135 mm und 140 mm, aufweisen. Ferner kann die Steuervorrichtung eine Tiefe zwischen 140 mm und 170 mm, vorzugsweise zwischen 150 mm und 165 mm, besonders bevorzugt zwischen 155 mm und 160 mm, aufweisen. Dabei hat es sich gezeigt, dass bei diesen Abmessungswerten, welche sich allesamt auf den Ausgangszustand der Steuervorrichtung beziehen, d.h. den ungeschwenkten Zustand des Steuerhebels, die zuvor genannten Kriterien hinsichtlich Kollisionsgefahr und notwendiger vorhandener Fläche erfüllt sind.

In einer optionalen Ausführungsform kann die Steuervorrichtung über den Befestigungsabschnitt des Basiskörpers an einer Armschiene in dem Innenraum eines Arbeitsfahrzeugs befestigbar sein. Die Armschiene erfüllt dabei insbesondere den Zweck, dass die Bedienperson seinen Arm während der Verwendung der Steuervorrichtung auf der Armschiene bzw. einer davon umfassten Armablage ablegen kann, um somit die Belastung des gesamten Arms zu reduzieren und frühzeitige Ermüdungserscheinungen zu verhindern. Vorzugsweise ist die Steuervorrichtung derart an der Armschiene befestigbar, dass die Ablage des Arms und das zeitgleiche Ergreifen des Steuerhebels möglichst ergonomisch ist.

Insbesondere kann die Steuervorrichtung über den Befestigungsabschnitt des Basiskörpers in unmittelbarer Nähe zu einem Lenkrad in dem Innenraum eines Arbeitsfahrzeugs befestigbar sein. Dies hat den Vorteil, dass die Bedienperson der Steuervorrichtung diese betätigen und zeitgleich als Fahrer des Arbeitsfahrzeugs fungieren kann. Ferner kann die Bedienperson in diesem Fall möglichst rasch zwischen einem Ergreifen des Lenkrads und der Steuervorrichtung wechseln, sollte dies beispielsweise in einer Gefahrensituation erforderlich sein.

Die Befestigung der Steuervorrichtung ist jedoch stets unter der Voraussetzung durchzuführen, dass eine Kollision mit dem Lenkrad vermieden wird. Die zuvor genannten Abmessungen in Bezug auf Höhe, Breite und Tiefe der Steuervorrichtung sind in diesem Zusammenhang optimiert worden, um die Steuervorrichtung möglichst nahe an dem Lenkrad anordnen zu können und zugleich ausreichend Fläche für die Ausbildung der Steuerelement bereitzustellen.

Hinsichtlich der bereits erwähnten Bedienelemente, welche an dem Steuerhebel ausgebildet sind, gilt, dass je nach Anwendungsfall eine spezifische Anzahl an Bedienelementen notwendig ist, um alle relevanten Steuerbefehle für einen jeweiligen Einsatz eines Arbeitsgerätes durchzuführen. In einer bevorzugten Ausführungsform kann der Steuerhebel daher wenigstens drei Bedienelemente, vorzugsweise wenigstens sechs Bedienelemente, besonders bevorzugt wenigstens acht Bedienelemente, aufweisen. Bei den Bedienelementen kann es sich um Drucktaster, Schalter, Schieber oder anderweitig gängige Bedienelemente handeln.

In einer weiteren Ausführungsform kann die Steuervorrichtung einen Notaus umfassen, welcher insbesondere an dem Basiskörper ausgebildet ist. Der Notaus ist vorzugsweise als Schalter in prominenter Position an dem Basiskörper angeordnet, sodass er für die Bedienperson leicht erkenntlich und einfach zugänglich ist, sofern dessen Betätigung notwendig sein sollte. Ferner kann der Notaus farbig markiert sein und/oder eine besondere Oberflächenstruktur aufweisen, letzteres beispielsweise um den Notaus auch ohne visuelle Erkennung identifizieren zu können. Bei Betätigung des Notaus wird das Arbeitsgerät insbesondere unverzüglich gestoppt bzw. ausgeschaltet und gegebenenfalls in eine Ausgangsposition verfahren. Alternativ kann der Notaus auch an dem Steuerhebel angeordnet sein, in diesem Fall jedoch derart, dass ein versehentliches Betätigen durch die Bedienperson ausgeschlossen ist. Dies kann beispielsweise durch Anbringen einer Abdeckkappe an dem Notaus erfolgen.

Optional kann die Steuervorrichtung über die Signalschnittstelle oder eine eigens dafür vorgesehene Anschlusseinheit mit einer Anzeigeeinheit verbindbar sein, um die erzeugten spezifischen Steuersignale in Form von Betriebsparametern auf der Anzeigeeinheit anzuzeigen. Bei der Anzeigeeinheit kann es sich um ein Display im Innenraum des Arbeitsfahrzeugs handeln, über welches die Bedienperson eine graphische Darstellung des Betriebszustands des Arbeitsgerätes erhält. Dazu können Informationen zu den erzeugten Steuersignalen bzw. Betriebsparametern eingeblendet werden.

Die Anzeigeeinheit kann ferner einen Prozessor sowie einen Speicher umfassen, um die erzeugten Steuersignale abzuspeichern und gegebenenfalls zu einem späteren Zeitpunkt zu rekonstruieren. Darüber hinaus kann die Anzeigeeinheit mit einem Touchscreen ausgestattet sein, um es der Bedienperson beispielsweise zu ermöglichen, zusätzliche Steuerbefehle, Einstellungen und/oder Programmierungen zu Steuervorrichtung und Arbeitsgerät über die Anzeigeeinheit vorzunehmen. Die erzeugten Steuersignale können über die Signalschnittstelle oder die Anschlusseinheit entweder mittels Datenkabel an die Anzeigeeinheit übertragen werden.

Optional kann an dem Arbeitsfahrzeug und/oder dem Arbeitsgerät wenigstens eine Kamera angeordnet sein, welche den Arbeitseinsatz des Arbeitsgerätes überwacht und entsprechende Informationen in Form von Bildern oder Videos an die Anzeigeeinheit überträgt. Gewünschtenfalls können diese Informationen mit den Betriebsparametern synchronisiert werden, um der Bedienperson beispielsweise mittels virtueller Markierungen detailliert Informationen zu dem Betriebszustand des Arbeitsgerätes anzuzeigen.

Des Weiteren kann über den Befestigungsabschnitt des Basiskörpers mindestens eine Lageeinstellung der Steuervorrichtung relativ zu einer Ausgangsposition in dem Innenraum eines Arbeitsfahrzeugs eingerichtet werden, wobei die Lageeinstellung ausgewählt ist aus Einstellung einer Winkelposition der Steuervorrichtung, Einstellung einer Position der Steuervorrichtung entlang einer Längsrichtung, und Einstellung einer Position der Steuervorrichtung entlang einer Querrichtung.

Der Befestigungsabschnitt der Steuervorrichtung ermöglicht es insbesondere die Steuervorrichtung beim Befestigen im Innenraum des Arbeitsfahrzeugs rotatorisch oder/und translatorisch anzupassen. Folglich erhöht die Einstellbarkeit des Befestigungsabschnitts die Flexibilität der Steuervorrichtung im Hinblick auf die Verwendung der Steuervorrichtung in verschiedenen Arbeitsfahrzeugtypen. Weist ein spezifisches Arbeitsfahrzeug beispielsweise einen relativ geräumigen Innenraum auf, in welchem der Abstand zwischen einer Befestigungsmöglichkeit der Steuervorrichtung und dem Lenkrad verhältnismäßig groß ist, so kann der Abstand zwischen Armschiene und Steuervorrichtung über den Befestigungsabschnitt vergrößert werden. Zusätzlich kann die Winkelposition der Steuervorrichtung nach rechts oder links relativ zu der Längsrichtung der Steuervorrichtung rotiert und/oder die Position der Steuervorrichtung entlang der Querrichtung eingestellt werden, um eine Kollision mit dem Lenkrad oder anderweitigen Fahrzeugkomponenten zu vermeiden.

Optional kann in einer Steuervorrichtung der Befestigungsabschnitt des Basiskörpers dazu eingerichtet sein, die Steuervorrichtung an einer Armschiene in dem Innenraum eines Arbeitsfahrzeugs zu befestigen und die Winkelposition, die Position entlang der Längsrichtung sowie die Position entlang der Querrichtung der Steuervorrichtung relativ zu der Armschiene einzustellen. Dadurch kann die Anordnung bzw. Ausrichtung der Steuervorrichtung individuell an eine jeweilige Bedienperson angepasst werden. Weist die Bedienperson beispielsweise einen überdurchschnittlich langen Unterarm auf, so kann über den Befestigungsabschnitt der Abstand zwischen Steuervorrichtung und Armschiene vergrößert werden. Auf diese Weise kann die Steuervorrichtung besonders ergonomisch in dem Innenraum des Arbeitsfahrzeugs befestigt werden.

Um die entsprechenden Positionen der Steuervorrichtung einstellen zu können, kann der Befestigungsabschnitt insbesondere eine Verbindungsplatte umfassen. Hierbei kann die Verbindungplatte wenigstens eine längliche Führungsaussparung aufweisen, welche beispielsweise entlang der Querrichtung der Steuervorrichtung verläuft. Zur Befestigung der Steuervorrichtung kann die Verbindungsplatte über eine Steck-, Schraubverbindung und/oder eine anderweitige Verbindungsart mit der Armschiene im Innenraum des Arbeitsfahrzeugs verbunden sein, sodass der Basiskörper der Steuervorrichtung auf die Verbindungsplatte aufsetzbar ist und daraufhin Verbindungselemente, beispielsweise Stifte, Schrauben oder Bolzen, durch die Führungsaussparung der Verbindungsplatte in entsprechende Aufnahmen im Basiskörper eingeführt werden, um den Basiskörper relativ zu der Armschiene in einer gewünschten Position zu fixieren.

Für die Bewertung der maximalen Einstellbereiche der Steuervorrichtung relativ zu der Ausgangsposition sind insbesondere die Kollisionsgefahr mit anderen Fahrzeugkomponenten im Innenraum, die Ergonomie der Steuervorrichtung sowie die technische Umsetzbarkeit maßgeblich. Dabei hat sich gezeigt, dass die Einstellbarkeit des Befestigungsabschnitts auf spezifische Bereiche sinnvoll ist, um alle drei genannten Kriterien zu erfüllen. In einer bevorzugten Ausführungsform kann die Winkelposition der Steuervorrichtung daher über einen Bereich von ± 20° bis ± 40°, vorzugsweise um ± 35°, relativ zu der Ausgangsposition in dem Innenraum des Arbeitsfahrzeugs einstellbar sein. Ferner kann die Position der Steuervorrichtung entlang der Längsrichtung über einen Bereich von 20 mm bis 40 mm, vorzugsweise um 30 mm, relativ zu der Ausgangsposition in dem Innenraum des Arbeitsfahrzeugs einstellbar sein und die Position der Steuervorrichtung entlang der Querrichtung über einen Bereich von 20 mm bis 50 mm, vorzugsweise um 35 mm, relativ zu der Ausgangsposition in dem Innenraum des Arbeitsfahrzeugs einstellbar sein.

Ferner kann ein Innenraumsystem eines Arbeitsfahrzeugs bereitgestellt sein, umfassend eine Armschiene, welche dafür eingerichtet ist, einen Unterarm eines Fahrers des Arbeitsfahrzeugs während der Fahrt abzustützen, sowie eine zuvor beschriebene Steuervorrichtung, wobei der Befestigungsabschnitt des Basiskörpers der Steuervorrichtung mit einem passenden Montageabschnitt der Armschiene koppelbar ist, um die Steuervorrichtung an der Armschiene mechanisch zu befestigen und vorzugsweise eine elektrische Verbindung zwischen Steuervorrichtung und Armschiene zur Übertragung von Daten oder/und zur elektrischen Versorgung der Steuervorrichtung bereitzustellen.

Gemäß einem zweiten Aspekt der Erfindung wird die oben genannte Aufgabe gelöst durch ein Fahrzeugsteuersystem zum Steuern eines Arbeitsfahrzeugs mit einem daran gekoppelten Arbeitsgerät, umfassend eine Steuervorrichtung nach dem ersten Aspekt der Erfindung und ein Arbeitsgeräte-Steuergerät, welches dafür eingerichtet ist, Steuersignale von der Steuervorrichtung zu empfangen und darauf basierend Arbeitsgeräte anzusteuern, die mit dem Arbeitsfahrzeug gekoppelt sind, wobei das Arbeitsgeräte-Steuergerät extern von der Steuervorrichtung angeordnet ist und mit der Steuervorrichtung über eine physische Verbindung oder über eine drahtlose Verbindung zur Übertragung von Steuersignalen verbunden ist. Ein solches Fahrzeugsteuersystem erzielt die oben in Bezug auf den ersten Aspekt der Erfindung beschriebenen Wirkungen und Vorteile.

In einer Ausführungsform der Erfindung nach dem zweiten Aspekt kann das Fahrzeugsteuersystem eine Fahrzeugschnittstelle umfassen, welche zur Datenkommunikation mit einem im Arbeitsfahrzeug integrierten Fahrzeug-Steuergerät zur Steuerung des Arbeitsfahrzeugs, insbesondere zur Steuerung von in das Arbeitsfahrzeug fest integrierten Fahrzeugkomponenten, eingerichtet ist. Das Fahrzeugsteuersystem kann auf diese Weise mit der im Fahrzeug integrierten Elektronik kommunizieren, insbesondere mit einem im Fahrzeug integrierten Fahrzeug-Steuergerät, welches beispielsweise ein Fahrzeugcomputer ist, der alle wesentlichen Fahrfunktionen und grundlegenden Fahrsteuerungen ausführt (Motorsteuerung des Fahrzeugs, Verarbeitung von Fahrzeugsensorik etc.).

Die Fahrzeugschnittstelle kann dabei Teil der Steuervorrichtung sein und kann insbesondere an dem Ausgang des Gateways bereitgestellt sein, so dass die Steuervorrichtung direkt mit dem Fahrzeug-Steuergerät kommunizieren kann. Alternativ kann die Fahrzeugschnittstelle an einem bezüglich der Steuervorrichtung externen Gerät vorgesehen werden, mit dem das Steuergerät signalübertragend verbunden ist, z.B. an einem Arbeitsgeräte-Steuergerät, so dass die Steuervorrichtung kompakter ausgeführt werden kann. **In** weiteren Varianten kann die Fahrzeugschnittstelle extern von der Steuervorrichtung und extern von dem Arbeitsgeräte-Steuergerät angeordnet sein und mit dem Arbeitsgeräte-Steuergerät über eine physische Verbindung oder über eine drahtlose Verbindung zur Übertragung von Steuersignalen verbunden sein, so dass die Signalübertragung von der Steuervorrichtung zum Fahrzeugsteuergerät über das Arbeitsgeräte-Steuergerät erfolgt.

In einer weiteren Ausführungsform der Erfindung nach dem zweiten Aspekt ist das Fahrzeugsteuersystem dafür eingerichtet, Anzeigeansteuerungssignale zur Ansteuerung eines Bildschirms des Arbeitsfahrzeugs über die Fahrzeugschnittstelle an das Fahrzeug-Steuergerät zu übertragen, um das Fahrzeug-Steuergerät dazu anzuweisen, eine Bildinformation an dem Bildschirm anzuzeigen. Auf diese Weiser kann der Benutzer eine optische Rückmeldung zu einer aktuellen Bedienung der Steuervorrichtung beziehungsweise einem aktuellen Betrieb des Arbeitsgeräts erhalten, wobei hierfür kein zusätzlicher Bildschirm bereitgestellt werden muss.

Gemäß einem dritten Aspekt der vorliegenden Erfindung wird die oben genannte Aufgabe der Erfindung gelöst durch ein Fahrzeugsteuersystem zum Steuern eines Arbeitsfahrzeugs mit einem daran gekoppelten Arbeitsgerät, umfassend eine erste Steuervorrichtung und eine zweite Steuervorrichtung. Die erste Steuervorrichtung umfasst einen Basiskörper mit einem Befestigungsabschnitt, welcher dazu eingerichtet ist, die erste Steuervorrichtung an einem Fahrzeugelement in einem Innenraum eines Arbeitsfahrzeugs zu befestigen; einen Steuerhebel zur manuellen Betätigung durch eine Bedienperson; ein Gelenk, an welchem der Steuerhebel um zwei zueinander senkrecht stehende Schwenkachsen relativ zu dem Basiskörper stufenlos schwenkbar gelagert ist; und eine Betätigungserfassungseinrichtung, welche dafür eingerichtet ist, eine Schwenkbewegung des Steuerhebels zu erfassen, wobei die erste Steuervorrichtung dafür eingerichtet ist, auf Basis einer Ausgabe der Betätigungserfassungseinrichtung spezifische Steuersignale zu erzeugen, wobei die erste Steuervorrichtung eine Signalschnittstelle zur Übertragung der Steuersignale an ein Fahrzeug-Steuergerät aufweist, und wobei die Signalschnittstelle der ersten Steuervorrichtung mindestens eine in den Befestigungsabschnitt integrierte Datenleitung umfasst, so dass durch Befestigen der ersten Steuervorrichtung an einem Fahrzeugelement in einem Innenraum eines Arbeitsfahrzeugs eine elektrische Kopplung zwischen der ersten Steuervorrichtung und dem Arbeitsfahrzeug herstellbar ist. Die zweite Steuervorrichtung umfasst einen Basiskörper mit einem Befestigungsabschnitt, welcher dazu eingerichtet ist, die zweite Steuervorrichtung an einem Fahrzeugelement in einem Innenraum eines Arbeitsfahrzeugs zu befestigen; einen Steuerhebel zur manuellen Betätigung durch eine Bedienperson; ein Gelenk, an welchem der Steuerhebel um zwei zueinander senkrecht stehende Schwenkachsen relativ zu dem Basiskörper stufenlos schwenkbar gelagert ist; und eine Betätigungserfassungseinrichtung, welche dafür eingerichtet ist, eine Schwenkbewegung des Steuerhebels zu erfassen, wobei die zweite Steuervorrichtung dafür eingerichtet ist, auf Basis einer Ausgabe der Betätigungserfassungseinrichtung spezifische Steuersignale zu erzeugen, wobei die zweite Steuervorrichtung eine Signalschnittstelle zur Übertragung der Steuersignale an ein Arbeitsgeräte-Steuergerät aufweist, und wobei die Signalschnittstelle der zweiten Steuervorrichtung separat und in einem Abstand von dem Befestigungsabschnitt der zweiten Steuervorrichtung angeordnet ist. Gemäß dem dritten Aspekt der Erfindung weisen ferner der Befestigungsabschnitt der ersten Steuervorrichtung und der Befestigungsabschnitt der zweiten Steuervorrichtung gleiche oder entsprechende Montagegeometrien aufweisen, so dass an einem Montageabschnitt ein und desselben Fahrzeugelements wahlweise jede der beiden Steuervorrichtungen passend montierbar und befestigbar ist.

In einem Fahrzeugsteuersystem des dritten Aspekts der Erfindung werden zwei unterschiedliche Steuervorrichtungen bereitgestellt, die sich hinsichtlich ihres Funktionsumfangs oder/und hinsichtlich ihrer Schnittstellen beziehungsweise hinsichtlich der unterstützten Datenübertragungsformate voneinander unterscheiden, wobei die beiden Steuervorrichtungen gleiche oder entsprechende Befestigungsabschnitte aufweisen, so dass an einem Fahrzeugelement mit entsprechendem Montageabschnitt wahlweise die erste Steuervorrichtung oder die zweite Steuervorrichtung montiert werden kann. Die Steuervorrichtung ist demensprechend austauschbar gestaltet. Die erste Steuervorrichtung kann nativ mit dem im Fahrzeug integrierten Fahrzeugsteuergerät kommunizieren und die im Fahrzeug integrierten Kommunikationswege nutzen. Zur Erweiterung der Funktionalität oder/und zur Ansteuerung komplexerer oder neuerer Arbeitsgeräte oder zur Ansteuerung von Arbeitsgeräten anderer Hersteller kann dann die erste Steuervorrichtung von dem Fahrzeugelement demontiert werden und gegen die zweite Steuervorrichtung ausgetauscht werden, dessen Befestigungsabschnitt ebenfalls passend zu dem Montageabschnitt des Fahrzeugelements ausgestaltet ist. Die zweite Steuervorrichtung weist dann eine andere Schnittstelle auf und kommuniziert mit einem Arbeitsgeräte-Steuergerät, z.B. über ein nicht-natives Datenübertragungsformat, um Funktionen und Betriebszustände des Arbeitsgeräts anzusteuern, die über den nativen Signalübertragungsweg und das im Fahrzeug integrierte Fahrzeugsteuergerät nicht ansteuerbar wären.

Da die zweite Steuervorrichtung eine von dem Befestigungsabschnitt separate und im Abstand angeordnete Signalschnittstelle aufweist, welche zur Signalübertragung demensprechend keine Kontaktierung von Datenleitungen erfordert, die fest im Fahrzeug, insbesondere fest im die Steuervorrichtung tragenden Fahrzeugelement, integriert sind, kann die zweite Steuervorrichtung flexibel auch an anderen Fahrzeugelementen des Fahrzeugs, welche die gleichen oder entsprechen passende Montageabschnitte aufweisen, montiert werden. Beispielsweise kann ein Innenraum/Cockpit des Arbeitsfahrzeugs mehrere Armschienen, insbesondere mehrere Sitze mit jeweils mindestens einer Armschiene aufweisen, welche alle jeweils über einen zu dem Befestigungsabschnitt der zweiten Steuervorrichtung passenden Montageabschnitt verfügen, während zur Begrenzung der Kosten der Fahrzeuginnenraumausstattung nicht alle der Armschienen über integrierte Datenleitungen zur Kommunikation mit dem Fahrzeugsteuergerät verfügen. In einer solchen Situation ermöglicht der Austausch der ersten Steuervorrichtung durch die zweite Steuervorrichtung eine freie Positionierung oder Umpositionierung der Steuervorrichtung an einer Beliebigen der Armschienen. So kann die Bedienung des Arbeitsgeräts, insbesondere während des Betriebs, schnell an eine andere Person übergeben werden, die auf einem anderen Sitz im Inneren des Arbeitsfahrzeugs sitzt.

Die Montagegeometrien der beiden Steuervorrichtungen eines Fahrzeugsteuersystems nach dem dritten Aspekt der Erfindung können dabei jeweils Montageführungen, insbesondere Schienenabschnitte, aufweisen, so dass die Steuervorrichtungen jeweils dafür eingerichtet sind, durch eine Steck- oder Schiebebewegung an dem Montageabschnitt des Fahrzeugelements montiert zu werden. Dies unterstützt den Austausch der Steuervorrichtung.

Es sei an dieser Stelle explizit darauf hingewiesen, dass sämtliche in Bezug auf den ersten, zweiten und dritten Aspekt beschriebenen Merkmale, Effekte und Vorteile auch auf die jeweiligen anderen Aspekte anwendbar und kombinierbar sein können.

Im Folgenden werden die erfindungsgemäße Steuervorrichtung sowie das erfindungsgemäße Fahrzeugsteuersystem in größerem Detail anhand von Ausführungsbeispielen mit Bezug auf die begleitenden Zeichnungen beschrieben. Es stellt dar:
- Figur 1: eine perspektivische Ansicht einer erfindungsgemäßen Steuervorrichtung in einem an einer Armschiene befestigten Zustand;
- Figur 2: eine Explosionsansicht der Figur 1, welche die Befestigung der Steuervorrichtung mit der Armschiene mittels eines Befestigungsabschnitts veranschaulicht;
- Figur 3: eine schematische Darstellung eines herkömmlichen Fahrzeugsteuersystems zum Steuern eines mit einem Arbeitsfahrzeug gekoppelten Arbeitsgerätes gemäß
- Figur 4: einem ersten Ausführungsbeispiel; eine schematische Darstellung eines weiteren Fahrzeugsteuersystems zum Steuern eines mit einem Arbeitsfahrzeug gekoppelten Arbeitsgerätes gemäß einem zweiten Ausführungsbeispiel;
- Figur 5: eine schematische Darstellung eines Fahrzeugsteuersystems zum Steuern eines mit einem Arbeitsfahrzeug gekoppelten Arbeitsgerätes gemäß einem dritten Ausführungsbeispiel; und
- Figur 6: eine schematische Darstellung eines Fahrzeugsteuersystems zum Steuern eines mit einem Arbeitsfahrzeug gekoppelten Arbeitsgerätes gemäß einem vierten Ausführungsbeispiel.

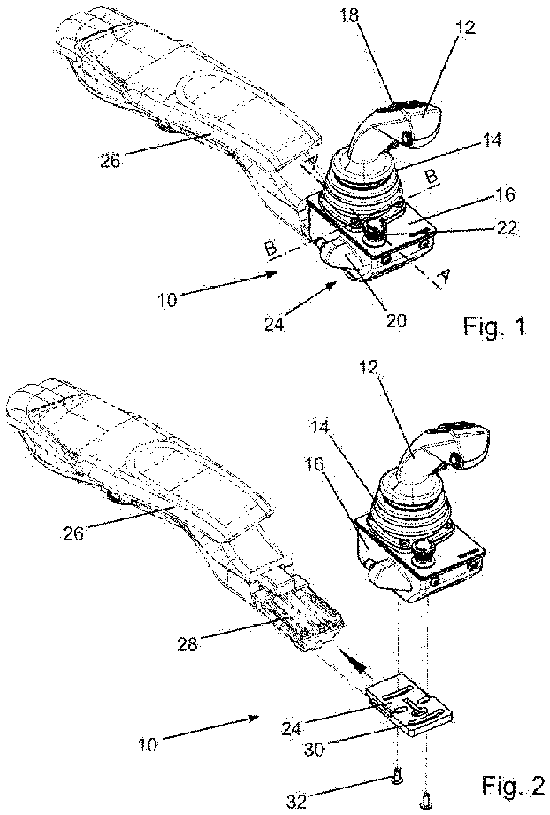

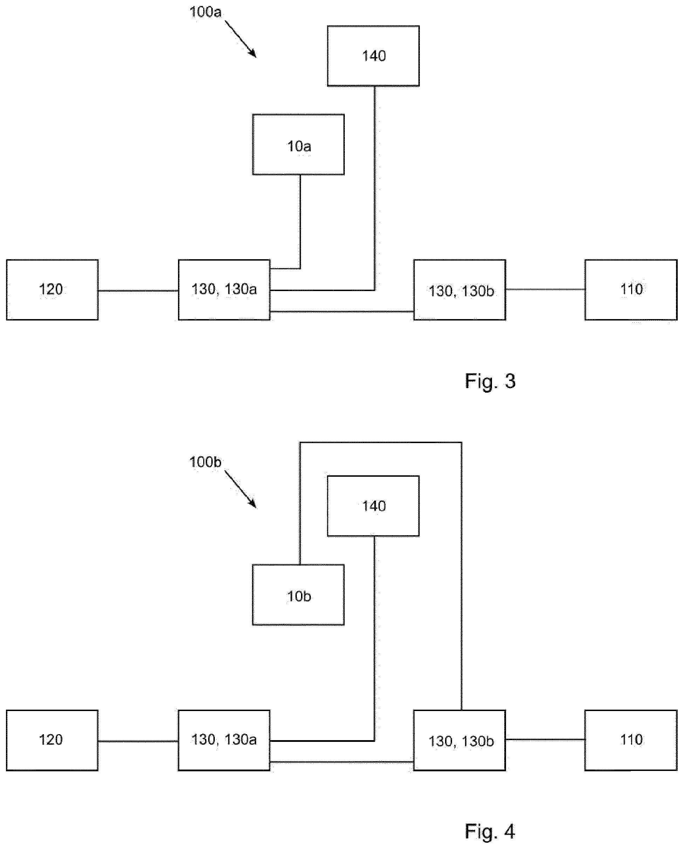

In den Figuren 1 und 2 ist eine exemplarische Steuervorrichtung 10 dargestellt. Die Steuervorrichtung 10 ist zum Steuern eines mit einem Arbeitsfahrzeug gekoppelten Arbeitsgerätes (nicht dargestellt) ausgebildet und ist insbesondere Teil eines Fahrzeugsteuersystems, welches unter Bezugnahme auf die Figuren 3 bis 6 im Detail erläutert wird. Die Steuervorrichtung 10 einen Steuerhebel 12, ein Gelenk 14 und einen Basiskörper 16. Der Steuerhebel 12 ist über das Gelenk 14 um zwei zueinander senkrecht stehende Schwenkachsen relativ zu dem Basiskörper 16 stufenlos schwenkbar, wobei eine erste Schwenkachse parallel zu der Längsrichtung A-A und eine zweite Schwenkachse parallel zu der Querrichtung B-B verläuft, welche in Figur 1 gekennzeichnet sind. Ferner ist der Steuerhebel 12 über das Gelenk 14 mit dem Basiskörper 16 verbunden, wobei der Basiskörper 16 in seinem Inneren elektronische Komponenten, insbesondere eine Betätigungserfassungseinrichtung, umfasst und als Befestigungsabschnitt 24 zur Befestigung einer Steuervorrichtung 10 im Innenraum eines Arbeitsfahrzeugs ausgebildet ist, wie im weiteren Verlauf unter Bezugnahme auf Figuren 1 und 2 erläutert wird.

An dem Steuerhebel 12 ist eine Mehrzahl von Bedienelementen 18 angeordnet, welche insbesondere in Form von Drucktastern, Schaltern und/oder Schiebern bereitgestellt sind, jedoch auch anderweitige Formen aufweisen können. Jedes einzelne der Bedienelemente 18 sowie der Steuerhebel 12 selbst stellt ein Steuerelement dar. Die Betätigungserfassungseinrichtung (nicht dargestellt) ist dazu eingerichtet eine manuelle Betätigung der Steuerelemente durch eine Bedienperson, also eine Schwenkbewegung des Steuerhebels 12 und ein Betätigen der Bedienelemente 18, zu erfassen und an die Steuervorrichtung 10 auszugeben. Auf Basis der Ausgabe der Betätigungserfassungseinrichtung erzeugt die Steuervorrichtung 10 eines oder mehrere spezifische Steuersignals zur Steuerung des hier nicht dargestellten Arbeitsgerätes. Somit kann über die Anzahl der Bedienelemente 18 an dem Steuerhebel 12 die Funktionalität der Steuervorrichtung 10 beeinflusst werden.

An dieser Stelle sei hinsichtlich des Aufbaus und der Funktionsweise einer Steuervorrichtung 10 exemplarisch auf die EP 3 115 863 A2 der vorliegenden Anmelderin verwiesen.

Die Steuervorrichtung 10 weist eine Signalschnittstelle 20 auf, welcher in den Figuren 1 und 2 exemplarisch mit einer Steckverbindung bereitgestellt ist und zur Kommunikation bzw. zum Datenaustausch der Steuervorrichtung 10, insbesondere durch Übertragung der erzeugten Steuersignale, mit einem hier nicht näher spezifizierten Arbeitsgerät dient. Hierzu wird an der Signalschnittstelle 20 ein Datenkabel angebracht, über welches eine Verbindung mit einem externen Steuergerät erzeugt wird. Dieses ist wiederum dem Arbeitsgerät zugewiesen. Darüber hinaus kann die Steuervorrichtung 10 über die Signalschnittstelle 20 mit Strom versorgt werden. Die Signalschnittstelle 20 ist vorteilhafterweise derart ausgebildet, dass sie, wie in Figur 1 gezeigt, auch im an einem Fahrzeugelement 26 befestigten Zustand der Steuervorrichtung 10 leicht zugänglich ist, wobei das Fahrzeugelement in dem vorliegenden Ausführungsbeispiel als Armschiene ausgebildet ist.

Ferner ist an dem Basiskörper 16 ein Notaus 22 in Form eines Schalters angebracht, wie in Figur 1 ersichtlich ist. Über den Notaus 22 kann die Bedienperson der Steuervorrichtung 10 den Betrieb des Arbeitsgerätes unverzüglich beenden, sollte dies erforderlich sein. Die Position des Notaus 22 ist in den Figuren lediglich exemplarisch dargestellt, jedoch ist der Notaus 22 vorzugsweise für die Bedienperson leicht ersichtlich und einfach zu erreichen, sodass er diesen im Gefahrenfall unverzüglich betätigen kann. Der Notaus 22 kann einen Druckknopf aufweisen, insbesondere einen Druckknopf mit pilzförmigem Kopf.

Anhand der Figuren 1 und 2 wird nun exemplarisch die Befestigung der Steuervorrichtung 10 sowie deren Einstellbarkeit relativ zu einer Ausgangsposition an einer Armschiene 26 im Innenraum eines Arbeitsfahrzeugs erläutert.

Die Steuervorrichtung 10 ist über einen von dem Basiskörper 16 umfassten Befestigungsabschnitt 24, welcher in Figur 1 angedeutet und im Detail in Figur 2 veranschaulicht ist, an einer Armschiene 26 in einem Innenraum bzw. einer Fahrerkabine eines Arbeitsfahrzeugs (nicht dargestellt) befestigt. Die Armschiene 26 ist in der Fahrerkabine insbesondere derart angeordnet, dass eine Bedienperson der Steuervorrichtung 10 zeitgleich als Fahrer des Arbeitsfahrzeugs fungieren kann. Demnach ist die Bedienperson dazu in der Lage, einen seiner Arme auf der Armschiene 26 abzulegen und den Steuerhebel 12 der Steuervorrichtung 10 zu ergreifen, um diese zu bedienen. Zeitgleich kann er mit seinem anderen Arm bzw. seiner Hand das Lenkrad des Arbeitsfahrzeugs steuern.

Der Befestigungsabschnitt 24 ist in dem gezeigten Ausführungsbeispiel exemplarisch als Verbindungsplatte ausgebildet, welche beispielsweise aus einem Metall oder Kunststoff besteht. Der Befestigungsabschnitt 24 kann über einen hier nicht näher spezifizierte Verbindungmechanismus, beispielsweise über eine Steckverbindung, an einem Montageabschnitt 28 der Armschiene 26 fixiert werden, wodurch die gesamte Steuervorrichtung 10 in unmittelbarer Nähe zu der Armschiene 26 befestigt werden kann.

Wie in Figur 2 dargestellt, wird über den Befestigungsabschnitt 24 des Basiskörpers 16 eine Lageeinstellung der Steuervorrichtung 10 relativ zu einer Ausgangsposition im Innenraum des Arbeitsfahrzeugs ermöglicht. Unter einer Lageeinstellung ist in diesem Zusammenhang eine Winkelposition der Steuervorrichtung 10, eine Position der Steuervorrichtung 10 entlang einer Längsrichtung, d.h. entlang der in Figur 1 indizierten Richtung A-A, und/oder eine Position der Steuervorrichtung entlang einer Querrichtung zu verstehen, d.h. entlang der in Figur 1 indizierten Richtung B-B. Die Einstellbarkeit des Befestigungsabschnitts 24 ist jeweils über einen bestimmten Bereich relativ zu einer Ausgangsposition der Steuervorrichtung 10 vornehmbar. Die Ausgangsposition der Steuervorrichtung 10 entspricht der in Figur 1 gezeigten Position, d.h. einer Position, in welcher der Basiskörper 16 der Steuervorrichtung 10 eine Winkelposition von 0° relativ zu der Armschiene 26 einnimmt und ferner weder in Längsrichtung A-A noch in Querrichtung B-B relativ zu der Armschiene 26 versetzt ist.

Um die zuvor genannten Positionen der Steuervorrichtung 10 einstellen zu können, weist der Befestigungsabschnitt 24 Führungsaussparungen 30 auf, wobei die spezifische Ausgestaltung der Führungsaussparungen 30 lediglich exemplarisch veranschaulicht ist. In Figur 2 sind nun Verbindungselemente 32 gezeigt, welche beispielsweise in Form von Stiften, Bolzen oder Schrauben ausgebildet sind. Jeweils ein Verbindungselement 32 wird von unten durch eine Führungsaussparung 30 geführt und in eine Aufnahme (nicht dargestellt) an der Unterseite des Basiskörpers 16 eingeführt und in dieser fixiert.

Das Grundprinzip für die Einstellung der Position der Steuervorrichtung 10 relativ zu der Armschiene 26 ist stets dasselbe. An der Unterseite des Basiskörpers 16 ist eine Mehrzahl von Aufnahmen ausgebildet, sodass über das Einführen der Verbindungselemente 32 in eine spezifische Aufnahme durch die länglichen Führungsaussparungen 30 eine translatorische und/oder rotatorische Anpassung der Steuervorrichtung 10 relativ zu der Armschiene 26 oder gegebenenfalls einer anderweitigen Befestigungsmöglichkeit im Innenraum des Arbeitsfahrzeugs ermöglicht wird.

Nachfolgend werden unter Bezugnahme auf die Figuren 3 bis 6 insgesamt vier Fahrzeugsteuersysteme 100a, 100b, 100c, 100d zum Steuern eines mit einem Arbeitsfahrzeug 120 gekoppelten Arbeitsgerätes 110 erläutert.

In Figur 3 ist ein herkömmliches Fahrzeugsteuersystem 100a gemäß einem ersten Ausführungsbeispiel schematisch veranschaulicht. Das Fahrzeugsteuersystem 100a umfasst eine Steuervorrichtung 10a, welche zum Steuern eines Arbeitsgerätes 110 geläufig ist. Ferner sind in dem Fahrzeugsteuersystem 100a ein Arbeitsfahrzeug 120, ein erstes externes Steuergerät, ausgebildet als Fahrzeug-Steuergerät 130a, ein zweites externes Steuergerät, ausgebildet als Arbeitsgeräte-Steuergerät 130b, sowie eine Anzeigeeinheit 140 vorhanden.

Die einzelnen Komponenten des Fahrzeugsteuersystems 100a sind miteinander gemäß der Darstellung in Figur 3 zur Übertragung von Signalen, insbesondere von Steuersignalen, sowie allgemein zur Datenkommunikation verbunden. Dazu weisen die einzelnen Komponenten hier nicht näher spezifizierte Signalschnittstellen auf. Die Verbindung der einzelnen Komponenten, wie in Figur 3 anhand schwarzer durchgezogener Linien veranschaulicht, erfolgt vorzugsweise über eine physische Verbindung, beispielsweise ein Datenkabel. Es ist jedoch auch denkbar, dass eine drahtlose Verbindung, insbesondere über Bluetooth oder WLAN, zwischen den spezifischen, miteinander verbundenen Komponenten bereitgestellt ist.

Betätigt nun eine Bedienperson die Steuervorrichtung 10a, so wird diese Betätigung durch eine Betätigungserfassungsvorrichtung der Steuervorrichtung 10a erfasst. Davon ausgehend werden spezifische Steuersignale zur Steuerung des an dem Arbeitsfahrzeug 120 gekoppelten Arbeitsgerätes 110 erzeugt, welches beispielsweise in Form eines Mähgerätes ausgebildet ist. Über eine Signalschnittstelle 20 der Steuervorrichtung 10a werden die Steuersignale daraufhin mittels der zuvor erwähnten physischen oder drahtlosen Verbindung an das Fahrzeug-Steuergerät 130a übertragen.

Das Fahrzeug-Steuergerät 130a fungiert als zentrales Steuergerät des Arbeitsfahrzeugs 120 und ist dazu fest in diesem integriert. So können einerseits von der Steuervorrichtung 10a erzeugte Steuersignale, welche auf die Steuerung des Arbeitsfahrzeugs 120 abzielen, von dem Fahrzeug-Steuergerät 130a verarbeitet werden. Entsprechende Steuersignale überträgt das Fahrzeug-Steuergerät 130a, insbesondere über eine Fahrzeugschnittstelle, an das Arbeitsfahrzeug 120 zur Steuerung von hier nicht näher spezifizierten, in dem Arbeitsfahrzeug 120 fest integrierten Fahrzeugkomponenten, beispielsweise der Fahrzeughydraulik. Darüber hinaus kann das Fahrzeug-Steuergerät 130a für die Steuerung der Fahrdynamikregelung, elektronischer Bremssysteme sowie anderweitiger elektronisch steuerbarer Fahrzeugoperationen eingerichtet sein.

Andererseits ist das Fahrzeug-Steuergerät 130a dazu eingerichtet, die von der Steuervorrichtung 10a erzeugten Steuersignale zur Steuerung des Arbeitsgerätes 110 an das Arbeitsgeräte-Steuergerät 130b zu übertragen. Diese verarbeitet wiederum die empfangenen Steuersignale und steuert das Arbeitsgerät 110 gemäß den spezifischen Steuersignalen an, wodurch die Steuerung des Arbeitsgerätes 110, d.h. beispielsweise dessen Hydraulik, in Echtzeit erreicht wird.

Schließlich ist das Fahrzeug-Steuergerät 130a dazu in der Lage, Anzeigeansteuerungssignale über eine Fahrzeugschnittstelle zu empfangen und zu verarbeiten. Diese Anzeigeansteuerungssignale dienen zur Ansteuerung der Anzeigeeinheit 140, welche in dem Fahrzeugsteuersystem 100a umfasst ist. Die Anzeigesteuerungssignale basieren dabei auf den für das Arbeitsfahrzeug 120 oder das Arbeitsgerät 110 erzeugten spezifischen Steuersignalen. Mittels der Anzeigesteuerungssignale kann das Fahrzeug-Steuergerät 130a dazu veranlasst werden, Bildinformationen zu erzeugen und auf der Anzeigeeinheit 140 anzuzeigen. Dadurch können der Bedienperson Informationen, insbesondere Betriebsparameter des Arbeitsfahrzeugs 120 sowie des gekoppelten Arbeitsgerätes 110, eingeblendet werden. Diese Informationen können sich unabhängig voneinander auf das Arbeitsfahrzeug 120 und/oder das Arbeitsgerät 110 beziehen.

Figur 4 zeigt schematisch ein weiteres Fahrzeugsteuersystem 100b gemäß einem zweiten Ausführungsbeispiel. Das Fahrzeugsteuersystem 100b beruht im Wesentlichen auf den selben Komponenten wie das Fahrzeugsteuersystem 100a des ersten Ausführungsbeispiels und unterscheidet sich von diesem lediglich durch die nachfolgend explizit aufgeführten Merkmale.

Wie aus Figur 4 hervorgeht, ist an der Steuervorrichtung 10b des Fahrzeugsteuersystems 100b keine Signalschnittstelle zur Übertragung spezifischer Steuersignale an das Fahrzeug-Steuergerät 130a vorhanden. Stattdessen leitet die Steuervorrichtung 10b die Steuersignale zur Steuerung des Arbeitsgerätes 110 direkt über entsprechende Signalschnittstellen an das Arbeitsgeräte-Steuergerät 130b, wodurch der Zwischenschritt der Verarbeitung der Steuersignale durch das Fahrzeug-Steuergerät 130a entfällt. Insbesondere wird auf diese Weise eine Steuerung des Arbeitsgerätes 110 unabhängig von dem Arbeitsfahrzeug 120 und dessen Steuersystem ermöglicht. Dadurch wird beispielsweise beim Nachrüsten einer Steuervorrichtung 10b in dem Arbeitsfahrzeug 120 kein Zugang zu dessen Steuersystem, insbesondere dem Fahrzeug-Steuergerät 130a, benötigt.

Optional können das Arbeitsgeräte-Steuergerät 130b und das Fahrzeug-Steuergerät 130a über entsprechende Signalschnittstellen miteinander verbunden sein. Dies kann insbesondere dann wünschenswert sein, wenn Bildinformationen auf der Anzeigeeinheit 140 angezeigt werden sollen, welche im Zusammenhang mit der Steuerung des Arbeitsgerätes 110 stehen, und/oder wenn über die Steuervorrichtung 10b Einfluss auf die Steuerung des Arbeitsfahrzeugs 130 genommen werden soll, wie zuvor zu dem Fahrzeugsteuersystem 100a des ersten Ausführungsbeispiels erläutert.

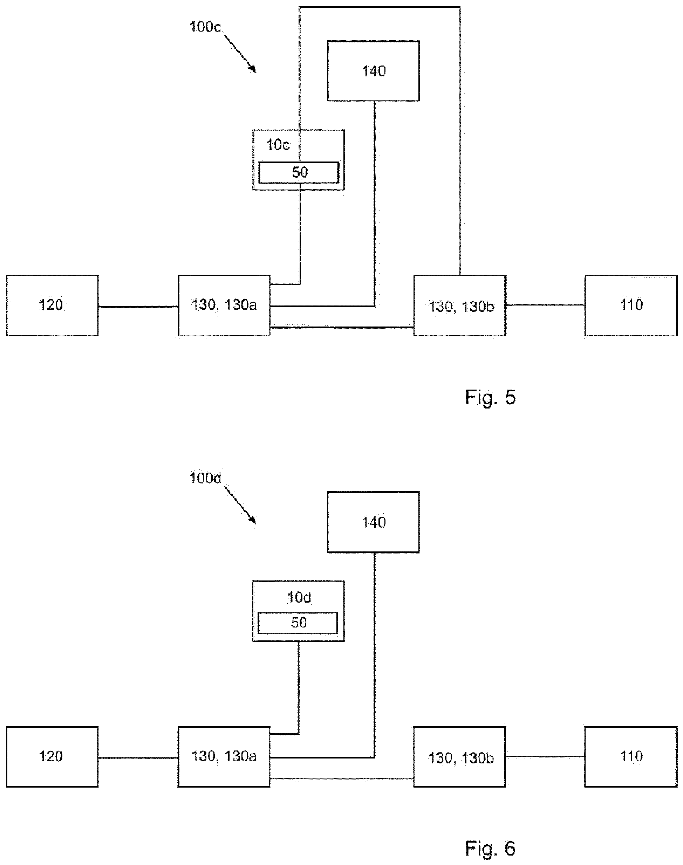

In Figur 5 ist nun ein drittes Ausführungsbeispiel eines Fahrzeugsteuersystems 100c veranschaulicht, welches im Wesentlichen auf den Komponenten des ersten und des zweiten Ausführungsbeispiels basiert, sich jedoch von diesen durch die Ausbildung eines Gateways 50 in der Steuervorrichtung 10c des Fahrzeugsteuersystem 100c unterscheidet.

Das Gateway 50 ist mit einem Signaleingang sowie mit einem Signalausgang ausgestattet und ist ferner dazu eingerichtet, an dem Signaleingang Signale von der Betätigungserfassungseinrichtung zu empfangen und an dem Signalausgang erste Steuersignale gemäß einem ersten Datenübertragungsformat und/oder Steuersignale gemäß einem zweiten Datenübertragungsformat auszugeben. Bei dem Datenübertragungsformat kann es sich um verschiedenste Formate handeln, welche zur Übertragung von Steuersignalen üblich sind, sodass über das Gateway 50 eine große Bandbreite an Arbeitsgeräten 110, insbesondere Arbeitsgeräte 110 verschiedener Herstellern, ansteuerbar ist. Das Gateway 50 ist außerdem dazu in der Lage, Steuersignale gemäß einem ersten und gemäß einem zweiten Datenübertragungsformat parallel bzw. zeitgleich auszugeben, sodass prinzipiell die Steuerung mehrerer an einem Arbeitsfahrzeug 120 gekoppelter Arbeitsgeräte 110 ermöglicht wird.

Schließlich kann die Ausgabe der Steuersignale mittels des Signalausgangs auch als Reaktion auf eine Konfigurationsänderung des Gateways 50 erfolgen, also beispielsweise eine Umprogrammierung des Gateways 50. Eine Konfigurationsänderung des Gateways kann wünschenswert sein, wenn Arbeitsgeräte 110 mit dem Arbeitsfahrzeug 120 gekoppelt werden, welche auf unterschiedlichen Steuerlogiken basieren bzw. mit unterschiedlichen Datenübertragungsformaten arbeiten.

Die Steuervorrichtung 10c ist, im Gegensatz zu der Steuervorrichtung 10a des ersten Ausführungsbeispiels und der Steuervorrichtung 10b des zweiten Ausführungsbeispiels, über das Gateway 50 sowohl mit dem Arbeitsgeräte-Steuergerät 130b als auch mit dem Fahrzeug-Steuergerät 130a verbunden. Hierzu sind an der Steuervorrichtung 10c, dem Arbeitsgeräte-Steuergerät 130b sowie dem Fahrzeug-Steuergerät 130a entsprechende Signalschnittstellen ausgebildet. Die Steuervorrichtung 10c kann somit jeweils unabhängig voneinander Steuersignale an das Arbeitsgeräte-Steuergerät 130a und das Fahrzeug-Steuergerät 130b übermitteln. Dadurch wird gewährleistet, dass Steuersignale über eine erste Signalschnittstelle, welche dem Arbeitsgeräte-Steuergerät 130a zugewiesen ist, getrennt von Steuersignalen, welche über eine dem Fahrzeug-Steuergerät 130b zugewiesene zweite Signalschnittstelle übertragen werden, übermittelt werden können, sodass sowohl das Arbeitsgerät 110 als auch das Arbeitsfahrzeug 120 direkt über das jeweilige externe Steuergerät 130a, 130b angesteuert werden.

Analog zu dem Fahrzeugsteuersystem 100b des zweiten Ausführungsbeispiels, können das Arbeitsgeräte-Steuergerät 130b und das Fahrzeug-Steuergerät 130 optional auch über entsprechende Signalschnittstellen direkt miteinander verbunden sein. Dadurch kann beispielsweise das Anzeigen von Bildinformationen auf der Anzeigeeinheit 140 ermöglicht werden, welche im Zusammenhang mit den über die erste Signalschnittstelle an das Arbeitsgeräte-Steuergerät 130a übertragenen Steuersignalen stehen, da eine direkte Verbindung des Arbeitsgeräte-Steuergeräts 130a mit der Anzeigeeinheit 140 in dem dritten Ausführungsbeispiel nicht vorhanden ist. Alternativ kann das Anzeigen entsprechender Steuersignale jedoch auch über die zweite Signalschnittstelle zwischen Gateway 50 und Fahrzeug-Steuergerät 130b erfolgen, welche wiederum in Verbindung mit der Anzeigeeinheit 140 steht.

Ferner weisen die Signalschnittstellen des Fahrzeugsteuersystems 100c und darüber hinaus ebenfalls die Signalschnittstellen des im weiteren Verlauf erläuterten Fahrzeugsteuersystems 100d des vierten Ausführungsbeispiels in dem in Figur 2 veranschaulichten Befestigungsabschnitt 24 jeweils wenigstens eine integrierte Datenleitung auf. Über diese Datenleitung wird die elektrische Kopplung zwischen der Steuervorrichtung 10c bzw. 10d und dem Arbeitsfahrzeug in dem befestigten Zustand hergestellt, welcher in den Figuren 1 und 2 gezeigt ist.

Die zuvor erwähnte Fahrzeugschnittstelle, welche zur Datenkommunikation mit dem Fahrzeug-Steuergerät 130a eingerichtet ist, kann Bestandteil der Steuervorrichtung 10c sein und in diesem Zusammenhang an dem Ausgang des Gateways 50 bereitgestellt sein. Alternativ kann die Fahrzeugschnittstelle auch Bestandteil des Arbeitsgeräte-Steuergeräts 130b sein. Somit ist die Fahrzeugschnittstelle je nach gewünschter Konfiguration entweder dem Arbeitsgerät 110 oder dem Arbeitsfahrzeug 120 direkt zugewiesen.

Figur 6 zeigt schließlich ein viertes Ausführungsbeispiel eines Fahrzeugsteuersystems 100d, welches im Wesentlichen auf den Komponenten des ersten, zweiten und dritten Ausführungsbeispiels basiert und eine Steuervorrichtung 10d mit Gateway 50 gemäß dem dritten Ausführungsbeispiel aufweist. Im Hinblick auf die Eigenschaften des Gateways 50 wird daher an dieser Stelle auf das dritte Ausführungsbeispiel verwiesen. Die Ausbildung der Signalschnittstellen, insbesondere die Verbindung der einzelnen Komponenten, entspricht hingegen der des ersten Ausführungsbeispiels. Daher erfolgt die Steuerung des Arbeitsgerätes 110 vollständig über das fahrzeugseitige Steuersystem, d.h. über die direkte Verbindung zwischen Steuervorrichtung 10d und dem Fahrzeug-Steuergerät 130a, welches die spezifischen Steuersignale der Steuervorrichtung 10d verarbeitet und wiederum an das Arbeitsgeräte-Steuergerät 130b weiterleitet.

In den Figuren nicht dargestellt, jedoch allgemein gültig ist, dass zusätzlich zu den ersten Steuervorrichtungen 10a, 10b, 10c, 10d der Fahrzeugsteuersysteme 100a, 100b, 100c, 100d jeweils eine weitere, zweite Steuervorrichtung 10 bereitgestellt sein kann. Die zweite Steuervorrichtung 10 ist gemäß der ersten Steuervorrichtung 10a, 10b, 10c, 10d ausgebildet und umfasst daher ebenfalls einen Befestigungsabschnitt 24, welcher die gleichen Montagegeometrien aufweist, wie der Befestigungsabschnitt 24 der ersten Steuervorrichtung 10a, 10b, 10c, 10d. Über diesen Befestigungsabschnitt 24 kann die zweite Steuervorrichtung 10 an derselben, in den Figuren 1 und 2 dargestellten Armschiene 26 befestigt werden. Der Montageabschnitt 28 der Armschiene 26 kann hierfür derart ausgebildet sein, dass sowohl die erste Steuervorrichtung 10a, 10b, 10c, 10d als auch die zweite Steuervorrichtung 10 über den Montageabschnitt 28 an der Armschiene 26 befestigbar sind. Alternativ kann an der Armschiene 26 ein zweiter Montageabschnitt 28 bereitgestellt sein, welcher zur Befestigung der zweiten Steuervorrichtung 10 vorgesehen ist. Die erste und die zweite Steuervorrichtung 10 sind hinsichtlich der Befestigung an dem Montageabschnitt 28 austauschbar gestaltet. In einem Fahrzeugsteuersystem 100a, 100b, 100c, 100d kann demnach die erste Steuervorrichtung oder die zweite Steuervorrichtung angeordnet sein oder es können beide Steuervorrichtungen 10 zeitgleich vorhanden sein.

Das Bereitstellen zweier Steuervorrichtungen 10 in einem Fahrzeugsteuersystem 100a, 100b, 100c, 100d kann ferner dann vorteilhaft sein, wenn ein Arbeitsfahrzeug 120 zeitgleich mit zwei Arbeitsgeräten 110 gekoppelt ist. In diesem Fall kann jeweils eine der beiden Steuervorrichtungen zum Steuern eines Arbeitsgerätes 110 vorgesehen sein. Dadurch kann die Bedienperson 110 beim Steuern der Arbeitsgeräte über die Verwendung einer jeweiligen Steuervorrichtungen 110 eindeutig zwischen diesen unterscheiden, sodass die Gefahr einer ungewollten Betätigung eines der beiden Arbeitsgeräte 110 vermieden wird.

Außerdem kann es zweckmäßig sein, für ein erstes Arbeitsgerät 110 eine erste Steuervorrichtung 10 mit einem Steuerhebel 12 und Bedienelementen 18 zu verwenden, welche einen erhöhten Funktionsumfang aufweisen, während für ein zweites Arbeitsgerät 110 eine zweite Steuervorrichtung 10 eingesetzt wird, welche einen im Vergleich zu der ersten Steuervorrichtung 10 geringeren Funktionsumfang aufweist. Dies kann insbesondere dann sinnvoll sein, wenn das erste Arbeitsgerät 110 wesentlich komplexer als das zweite Arbeitsgerät 110 ist, d.h. dass zum Steuern des ersten Arbeitsgerätes 110 mehr Steuerelemente benötigt werden als für das zweite Arbeitsgerät 110. Neben dem Funktionsumfang unterscheiden sich die beiden Steuervorrichtungen 10 auch hinsichtlich ihrer Signalschnittstellen sowie der unterstützen Datenübertragungsformate, sodass beispielsweise Arbeitsgeräte 110 unterschiedlicher Hersteller parallel über die erste bzw. die zweite Steuervorrichtung 10 ansteuerbar sind.

Weitere Ausführungsformen der Erfindung werden durch die folgenden Beispiele beschrieben:
Beispiel 1: Steuervorrichtung (10; 10c, 10d) zum Steuern eines mit einem Arbeitsfahrzeug (120) gekoppelten Arbeitsgerätes (110), umfassend:
   - einen Basiskörper (16) mit einem Befestigungsabschnitt (24), welcher dazu eingerichtet ist, die Steuervorrichtung (10; 10c, 10d) an einem Fahrzeugelement (26) in einem Innenraum eines Arbeitsfahrzeugs (120) zu befestigen,
   - einen Steuerhebel (12) zur manuellen Betätigung durch eine Bedienperson;
   - ein Gelenk (14), an welchem der Steuerhebel (12) um zwei zueinander senkrecht stehende Schwenkachsen relativ zu dem Basiskörper stufenlos schwenkbar gelagert ist; und
   - eine Betätigungserfassungseinrichtung, welche dafür eingerichtet ist, eine Schwenkbewegung des Steuerhebels (12) zu erfassen,

   wobei die Steuervorrichtung (10; 10c, 10d) dafür eingerichtet ist, auf Basis einer Ausgabe der Betätigungserfassungseinrichtung spezifische Steuersignale zu erzeugen,
   und wobei die Steuervorrichtung (10; 10c, 10d) eine Signalschnittstelle (20) zur Übertragung der Steuersignale an ein externes Steuergerät (130) aufweist,
   wobei die Steuervorrichtung (10; 10c, 10d) ein Gateway (50) mit einem Signaleingang und einem Signalausgang umfasst,
   wobei das Gateway (50) dafür eingerichtet ist, an dem Signaleingang Signale von der Betätigungserfassungseinrichtung zu empfangen und an dem Signalausgang erste Steuersignale gemäß einem ersten Datenübertragungsformat auszugeben, und
   wobei das Gateway (50) ferner dafür eingerichtet ist, gleichzeitig mit Ausgabe der ersten Steuersignale oder/und nach einer Konfigurationsänderung des Gateways (50) zweite Steuersignale gemäß einem zweiten Datenübertragungsformat an dem Signalausgang auszugeben.
Beispiel 2: Steuervorrichtung (10; 10c, 10d) nach Beispiel 1, wobei die Steuervorrichtung (10; 10c, 10d) eine erste Signalschnittstelle (20) zur Übertragung der ersten Steuersignale und eine von der ersten Signalschnittstelle separate zweite Signalschnittstelle zur Übertragung der zweiten Steuersignale aufweist.
Beispiel 3: Steuervorrichtung (10; 10c, 10d) nach Beispiel 2, wobei die erste Signalschnittstelle (20) und die zweite Signalschnittstelle voneinander unterschiedliche physische Konfigurationen aufweisen oder/und für den Datenaustausch auf Basis unterschiedlicher Kommunikationsprotokolle eingerichtet sind.
Beispiel 4: Steuervorrichtung (10; 10c, 10d) nach Beispiel 2 oder 3, wobei die erste Signalschnittstelle (20) oder/und die zweite Signalschnittstelle eine Steckverbindung zum Anschluss eines Datenkabels aufweist.
Beispiel 5: Steuervorrichtung (10; 10c, 10d) nach mindestens einem der Beispiele 2 bis 4, wobei die erste Signalschnittstelle (20) oder/und die zweite Signalschnittstelle mindestens eine in den Befestigungsabschnitt (24) integrierte Datenleitung umfasst, so dass durch Befestigen der Steuervorrichtung an einem Fahrzeugelement (26) in einem Innenraum eines Arbeitsfahrzeugs (120) eine elektrische Kopplung zwischen der Steuervorrichtung (10; 10c, 10d) und dem Arbeitsfahrzeug (120) herstellbar ist.
Beispiel 6: Steuervorrichtung (10; 10c, 10d) nach Beispiel 1, wobei die Steuervorrichtung (10; 10c, 10d) eine Signalschnittstelle (20) aufweist und dafür eingerichtet ist, die ersten Steuersignale und die zweiten Steuersignale über dieselbe Schnittstelle (20) auszugeben.
Beispiel 7: Steuervorrichtung (10; 10c, 10d) nach einem der Beispiele 2 bis 6, wobei das Gateway (50) dafür eingerichtet ist, gleichzeitig mit Ausgabe der ersten oder/und zweien Steuersignale oder/und nach einer Konfigurationsänderung des Gateways (50) dritte Steuersignale gemäß einem dritten Datenübertragungsformat an dem Signalausgang auszugeben, und
   wobei die Steuervorrichtung (10; 10c, 10d) dafür eingerichtet ist, die zweiten Steuersignale und die dritten Steuersignale über die zweite Schnittstelle auszugeben.
Beispiel 8: Steuervorrichtung (10; 10c, 10d) nach einem der vorhergehenden Beispiele, wobei die Steuervorrichtung (10; 10c, 10d) eine Höhe von wenigstens 200 mm, vorzugsweise wenigstens 230 mm, besonders bevorzugt wenigstens 250 mm, aufweist.
Beispiel 9: Steuervorrichtung (10; 10c, 10d) nach einem der vorhergehenden Beispiele, wobei die Signalschnittstelle (20) derart an einer Außenfläche des Basiskörpers (16) ausgebildet ist, dass sie selbst im befestigten Zustand der Steuervorrichtung (10; 10c, 10d) zugänglich ist.
Beispiel 10: Steuervorrichtung (10; 10c, 10d) nach einem der vorhergehenden Beispiele, wobei die Steuervorrichtung (10; 10c, 10d) eine Breite zwischen 120 mm und 150 mm, vorzugsweise zwischen 130 mm und 145 mm, besonders bevorzugt zwischen 135 mm und 140 mm, aufweist.
Beispiel 11: Steuervorrichtung (10; 10c, 10d) nach einem der vorhergehenden Beispiele, wobei die Steuervorrichtung (10; 10c, 10d) eine Tiefe zwischen 140 mm und 170 mm, vorzugsweise zwischen 150 mm und 165 mm, besonders bevorzugt zwischen 155 mm und 160 mm, aufweist.
Beispiel 12: Steuervorrichtung (10; 10c, 10d) nach einem der vorhergehenden Beispiele, wobei die Steuervorrichtung (10; 10c, 10d) über den Befestigungsabschnitt (24) des Basiskörpers (16) an einer Armschiene (24) in dem Innenraum eines Arbeitsfahrzeugs (120) befestigbar ist.
Beispiel 13: Steuervorrichtung (10; 10c, 10d) nach einem der vorhergehenden Beispiele, wobei die Steuervorrichtung (10; 10c, 10d) über den Befestigungsabschnitt (24) des Basiskörpers (16) in unmittelbarer Nähe zu einem Lenkrad in dem Innenraum eines Arbeitsfahrzeugs (120) befestigbar ist.
Beispiel 14: Steuervorrichtung (10; 10c, 10d) nach einem der vorhergehenden Beispiele, wobei der Steuerhebel (12) wenigstens drei Bedienelemente (18), vorzugsweise wenigstens sechs Bedienelement (18), besonders bevorzugt wenigstens acht Bedienelemente (18), aufweist.
Beispiel 15: Steuervorrichtung (10; 10c, 10d) nach einem der vorhergehenden Beispiele, wobei die Steuervorrichtung (10; 10c, 10d) einen Notaus (22) umfasst, welcher insbesondere an dem Basiskörper (16) ausgebildet ist.
Beispiel 16: Steuervorrichtung (10; 10c, 10d) nach einem der vorhergehenden Beispiele, wobei die Steuervorrichtung (10; 10c, 10d) über die Signalschnittstelle (20) oder eine eigens dafür vorgesehene Anschlusseinheit mit einer Anzeigeeinheit (140) verbindbar ist, um die erzeugten spezifischen Steuersignale in Form von Betriebsparametern auf der Anzeigeeinheit (140) anzuzeigen.
Beispiel 17: Steuervorrichtung (10; 10c, 10d) nach einem der vorhergehenden Beispiele, wobei über den Befestigungsabschnitt (24) des Basiskörpers (16) mindestens eine Lageeinstellung der Steuervorrichtung (10; 10c, 10d) relativ zu einer Ausgangsposition in dem Innenraum eines Arbeitsfahrzeugs (120) ermöglicht ist, wobei die Lageeinstellung ausgewählt ist aus
   - Einstellung einer Winkelposition der Steuervorrichtung (10; 10c, 10d),
   - Einstellung einer Position der Steuervorrichtung (10; 10c, 10d) entlang einer Längsrichtung (A-A),
   - Einstellung einer Position der Steuervorrichtung (10; 10c, 10d) entlang einer Querrichtung (B-B).
Beispiel 18: Steuervorrichtung (10; 10c, 10d) nach Beispiel 17, wobei der Befestigungsabschnitt (24) des Basiskörpers (16) dazu eingerichtet ist, die Steuervorrichtung (10; 10c, 10d) an einer Armschiene (26) in dem Innenraum eines Arbeitsfahrzeugs (120) zu befestigen, und die Winkelposition, die Position entlang der Längsrichtung (A-A) sowie die Position entlang der Querrichtung (B-B) der Steuervorrichtung (10; 10c, 10d) relativ zu der Armschiene (26) einstellbar ist.
Beispiel 19: Steuervorrichtung (10; 10c, 10d) nach einem der vorhergehenden Beispiele, wobei der Befestigungsabschnitt (24) eine Verbindungsplatte umfasst.
Beispiel 20: Steuervorrichtung (10; 10c, 10d) nach einem der Beispiele 17 bis 19, wobei die Winkelposition der Steuervorrichtung (10; 10c, 10d) über einen Bereich von ± 20° bis ± 40°, vorzugsweise um ± 35°, relativ zu der Ausgangsposition in dem Innenraum des Arbeitsfahrzeugs (120) einstellbar ist.
Beispiel 21: Steuervorrichtung (10; 10c, 10d) nach einem der Beispiele 17 bis 20, wobei die Position der Steuervorrichtung (10; 10c, 10d) entlang der Längsrichtung (A-A) über einen Bereich von 20 mm bis 40 mm, vorzugsweise um 30 mm, relativ zu der Ausgangsposition in dem Innenraum des Arbeitsfahrzeugs (120) einstellbar ist.
Beispiel 22: Steuervorrichtung (10; 10c, 10d) nach einem der Beispiele 17 bis 20, wobei die Position der Steuervorrichtung (10; 10c, 10d) entlang der Querrichtung (B-B) über einen Bereich von 20 mm bis 50 mm, vorzugsweise um 35 mm, relativ zu der Ausgangsposition in dem Innenraum des Arbeitsfahrzeugs (120) einstellbar ist.
Beispiel 23: Fahrzeugsteuersystem (100c, 100d) zum Steuern eines mit einem Arbeitsfahrzeug (120) gekoppelten Arbeitsgerätes (110), umfassend:
   - eine Steuervorrichtung (10; 10c, 10d) nach einem der vorhergehenden Beispiele,
   - ein Arbeitsgeräte-Steuergerät (130b), welches dafür eingerichtet ist, Steuersignale von der Steuervorrichtung (10; 10c, 10d) zu empfangen und darauf basierend Arbeitsgeräte (110) anzusteuern, die mit dem Arbeitsfahrzeug (120) gekoppelt sind, wobei das Arbeitsgeräte-Steuergerät (130b) extern von der Steuervorrichtung (10; 10c, 10d) angeordnet ist und mit der Steuervorrichtung (10; 10c, 10d) über eine physische Verbindung oder über eine drahtlose Verbindung zur Übertragung von Steuersignalen verbunden ist.
Beispiel 24: Fahrzeugsteuersystem (100c, 100d) nach Beispiel 23, ferner umfassend eine Fahrzeugschnittstelle, welche zur Datenkommunikation mit einem im Arbeitsfahrzeug (120) integrierten Fahrzeug-Steuergerät (130a) zur Steuerung des Arbeitsfahrzeugs (120), insbesondere zur Steuerung von in dem Arbeitsfahrzeug (120) fest integrierten Fahrzeugkomponenten, eingerichtet ist.
Beispiel 25: Fahrzeugsteuersystem (100c, 100d) nach Beispiel 24, wobei die Fahrzeugschnittstelle Teil der Steuervorrichtung (10; 10c, 10d) ist und an dem Ausgang des Gateways (50) bereitgestellt ist, oder/und wobei die Fahrzeugschnittstelle Teil des Arbeitsgeräte-Steuergerätes (130b) ist.
Beispiel 26: Fahrzeugsteuersystem (100c, 100d) nach Beispiel 24,
   wobei die Fahrzeugschnittstelle extern von der Steuervorrichtung (10; 10c, 10d) angeordnet ist und mit der Steuervorrichtung (10; 10c, 10d) über eine physische Verbindung oder über eine drahtlose Verbindung zur Übertragung von Steuersignalen verbunden ist, oder/und
   wobei die Fahrzeugschnittstelle extern von dem Arbeitsgeräte-Steuergerät (130b) angeordnet ist und mit dem Arbeitsgeräte-Steuergerät (130b) über eine physische Verbindung oder über eine drahtlose Verbindung zur Übertragung von Steuersignalen verbunden ist.
Beispiel 27: Fahrzeugsteuersystem (100c, 100d) nach einem der Beispiele 23 bis 26, wobei das Fahrzeugsteuersystem (100c, 100d) dafür eingerichtet ist, Anzeigeansteuerungssignale zur Ansteuerung einer Anzeigeeinheit (140) des Arbeitsfahrzeugs (120) über die Fahrzeugschnittstelle an das Fahrzeug-Steuergerät (130a) zu übertragen, um das Fahrzeug-Steuergerät (130a) dazu anzuweisen, eine Bildinformation an der Anzeigeeinheit (140) anzuzeigen.
Beispiel 28: Fahrzeugsteuersystem (100c, 100d) zum Steuern eines mit einem Arbeitsfahrzeug (120) gekoppelten Arbeitsgerätes (110), umfassend:
   - eine erste Steuervorrichtung (10; 10c, 10d), welche umfasst:
      - einen Basiskörper (16) mit einem Befestigungsabschnitt (24), welcher dazu eingerichtet ist, die erste Steuervorrichtung (10; 10c, 10d) an einem Fahrzeugelement (26) in einem Innenraum eines Arbeitsfahrzeugs (120) zu befestigen,
      - einen Steuerhebel (12) zur manuellen Betätigung durch eine Bedienperson;
      - ein Gelenk (14), an welchem der Steuerhebel (12) um zwei zueinander senkrecht stehende Schwenkachsen relativ zu dem Basiskörper stufenlos schwenkbar gelagert ist; und
      - eine Betätigungserfassungseinrichtung, welche dafür eingerichtet ist, eine Schwenkbewegung des Steuerhebels (12) zu erfassen,

      wobei die erste Steuervorrichtung (10; 10c, 10d) dafür eingerichtet ist, auf Basis einer Ausgabe der Betätigungserfassungseinrichtung spezifische Steuersignale zu erzeugen,
      wobei die erste Steuervorrichtung (10; 10c, 10d) eine Signalschnittstelle (20) zur Übertragung der Steuersignale an ein Fahrzeug-Steuergerät (130a) aufweist, und
      wobei die Signalschnittstelle (20) der ersten Steuervorrichtung (10; 10c, 10d) mindestens eine in den Befestigungsabschnitt (24) integrierte Datenleitung umfasst, so dass durch Befestigen der ersten Steuervorrichtung an einem Fahrzeugelement (26) in einem Innenraum eines Arbeitsfahrzeugs (120) eine elektrische Kopplung zwischen der ersten Steuervorrichtung (10; 10c, 10d) und dem Arbeitsfahrzeug (120) herstellbar ist,
   - eine zweite Steuervorrichtung, welche umfasst:
      - einen Basiskörper mit einem Befestigungsabschnitt, welcher dazu eingerichtet ist, die zweite Steuervorrichtung an einem Fahrzeugelement in einem Innenraum eines Arbeitsfahrzeugs (120) zu befestigen,
      - einen Steuerhebel zur manuellen Betätigung durch eine Bedienperson;
      - ein Gelenk, an welchem der Steuerhebel um zwei zueinander senkrecht stehende Schwenkachsen relativ zu dem Basiskörper stufenlos schwenkbar gelagert ist; und
      - eine Betätigungserfassungseinrichtung, welche dafür eingerichtet ist, eine Schwenkbewegung des Steuerhebels zu erfassen,

      wobei die zweite Steuervorrichtung dafür eingerichtet ist, auf Basis einer Ausgabe der Betätigungserfassungseinrichtung spezifische Steuersignale zu erzeugen,
      wobei die zweite Steuervorrichtung eine Signalschnittstelle zur Übertragung der Steuersignale an ein Arbeitsgeräte-Steuergerät (130b) aufweist,
      wobei die Signalschnittstelle der zweiten Steuervorrichtung separat und in einem Abstand von dem Befestigungsabschnitt der zweiten Steuervorrichtung angeordnet ist,
   wobei der Befestigungsabschnitt (24) der ersten Steuervorrichtung (10; 10c, 10d) und der Befestigungsabschnitt der zweiten Steuervorrichtung gleiche oder entsprechende Montagegeometrien aufweisen, so dass an einem Montageabschnitt (28) ein und desselben Fahrzeugelements (26) wahlweise jede der beiden Steuervorrichtungen passend montierbar und befestigbar ist.
Beispiel 29: Fahrzeugsteuersystem (100c, 100d) nach Beispiel 28, wobei die Montagegeometrien der beiden Steuervorrichtungen jeweils Montageführungen, insbesondere Schienenabschnitte, aufweisen, so dass die Steuervorrichtungen jeweils dafür eingerichtet sind, durch eine Steck- oder Schiebebewegung an dem Montageabschnitt (28) des Fahrzeugelements montiert zu werden.
Beispiel 30: Fahrzeugsteuersystem (100c, 100d) nach Beispiel 28 oder 29, wobei die erste Steuervorrichtung (10; 10c, 10d) oder/und die zweite Steuervorrichtung eine Steuervorrichtung nach einem der Beispiele 1 bis 22 ist oder/und dass das Fahrzeugsteuersystem (100c, 100d) ein Fahrzeugsteuersystem nach einem der Beispiele 23 bis 27 ist.

## Patentansprüche

1. Steuervorrichtung (10; 10c, 10d) zum Steuern eines mit einem Arbeitsfahrzeug (120) gekoppelten Arbeitsgerätes (110), umfassend:
- einen Basiskörper (16) mit einem Befestigungsabschnitt (24), welcher dazu eingerichtet ist, die Steuervorrichtung (10; 10c, 10d) an einem Fahrzeugelement (26) in einem Innenraum eines Arbeitsfahrzeugs (120) zu befestigen,
- einen Steuerhebel (12) zur manuellen Betätigung durch eine Bedienperson;
- ein Gelenk (14), an welchem der Steuerhebel (12) um zwei zueinander senkrecht stehende Schwenkachsen relativ zu dem Basiskörper stufenlos schwenkbar gelagert ist; und
- eine Betätigungserfassungseinrichtung, welche dafür eingerichtet ist, eine Schwenkbewegung des Steuerhebels (12) zu erfassen,
wobei die Steuervorrichtung (10; 10c, 10d) dafür eingerichtet ist, auf Basis einer Ausgabe der Betätigungserfassungseinrichtung spezifische Steuersignale zu erzeugen,
und wobei die Steuervorrichtung (10; 10c, 10d) eine Signalschnittstelle (20) zur Übertragung der Steuersignale an ein externes Steuergerät (130) aufweist,
**dadurch gekennzeichnet,**
**dass** die Steuervorrichtung (10; 10c, 10d) ein Gateway (50) mit einem Signaleingang und einem Signalausgang umfasst,
wobei das Gateway (50) dafür eingerichtet ist, an dem Signaleingang Signale von der Betätigungserfassungseinrichtung zu empfangen und an dem Signalausgang erste Steuersignale gemäß einem ersten Datenübertragungsformat auszugeben, und
wobei das Gateway (50) ferner dafür eingerichtet ist, gleichzeitig mit Ausgabe der ersten Steuersignale oder/und nach einer Konfigurationsänderung des Gateways (50) zweite Steuersignale gemäß einem zweiten Datenübertragungsformat an dem Signalausgang auszugeben.

2. Steuervorrichtung (10; 10c, 10d) nach Anspruch 1, wobei die Steuervorrichtung (10; 10c, 10d) eine erste Signalschnittstelle (20) zur Übertragung der ersten Steuersignale und eine von der ersten Signalschnittstelle separate zweite Signalschnittstelle zur Übertragung der zweiten Steuersignale aufweist,
und wobei die erste Signalschnittstelle (20) und die zweite Signalschnittstelle vorzugsweise voneinander unterschiedliche physische Konfigurationen aufweisen oder/und vorzugsweise für den Datenaustausch auf Basis unterschiedlicher Kommunikationsprotokolle eingerichtet sind,
und wobei die erste Signalschnittstelle (20) oder/und die zweite Signalschnittstelle vorzugsweise eine Steckverbindung zum Anschluss eines Datenkabels aufweist.

3. Steuervorrichtung (10; 10c, 10d) nach Anspruch 2, wobei die erste Signalschnittstelle (20) oder/und die zweite Signalschnittstelle mindestens eine in den Befestigungsabschnitt (24) integrierte Datenleitung umfasst, so dass durch Befestigen der Steuervorrichtung an einem Fahrzeugelement (26) in einem Innenraum eines Arbeitsfahrzeugs (120) eine elektrische Kopplung zwischen der Steuervorrichtung (10; 10c, 10d) und dem Arbeitsfahrzeug (120) herstellbar ist.

4. Steuervorrichtung (10; 10c, 10d) nach einem der Ansprüche 2 bis 3,
wobei das Gateway (50) dafür eingerichtet ist, gleichzeitig mit Ausgabe der ersten oder/und zweien Steuersignale oder/und nach einer Konfigurationsänderung des Gateways (50) dritte Steuersignale gemäß einem dritten Datenübertragungsformat an dem Signalausgang auszugeben, und
wobei die Steuervorrichtung (10; 10c, 10d) dafür eingerichtet ist, die zweiten Steuersignale und die dritten Steuersignale über die zweite Schnittstelle auszugeben.

5. Steuervorrichtung (10; 10c, 10d) nach einem der vorhergehenden Ansprüche, wobei die Steuervorrichtung (10; 10c, 10d) eine Höhe von wenigstens 200 mm, vorzugsweise wenigstens 230 mm, besonders bevorzugt wenigstens 250 mm, aufweist,
oder/und wobei die Steuervorrichtung (10; 10c, 10d) eine Breite zwischen 120 mm und 150 mm, vorzugsweise zwischen 130 mm und 145 mm, besonders bevorzugt zwischen 135 mm und 140 mm, aufweist,
oder/und wobei die Steuervorrichtung (10; 10c, 10d) eine Tiefe zwischen 140 mm und 170 mm, vorzugsweise zwischen 150 mm und 165 mm, besonders bevorzugt zwischen 155 mm und 160 mm, aufweist.

6. Steuervorrichtung (10; 10c, 10d) nach einem der vorhergehenden Ansprüche, wobei die Signalschnittstelle (20) derart an einer Außenfläche des Basiskörpers (16) ausgebildet ist, dass sie selbst im befestigten Zustand der Steuervorrichtung (10; 10c, 10d) zugänglich ist.

7. Steuervorrichtung (10; 10c, 10d) nach einem der vorhergehenden Ansprüche, wobei die Steuervorrichtung (10; 10c, 10d) über den Befestigungsabschnitt (24) des Basiskörpers (16) an einer Armschiene (24) in dem Innenraum eines Arbeitsfahrzeugs (120) befestigbar ist,
oder/und wobei die Steuervorrichtung (10; 10c, 10d) über den Befestigungsabschnitt (24) des Basiskörpers (16) in unmittelbarer Nähe zu einem Lenkrad in dem Innenraum eines Arbeitsfahrzeugs (120) befestigbar ist.

8. Steuervorrichtung (10; 10c, 10d) nach einem der vorhergehenden Ansprüche, wobei der Steuerhebel (12) wenigstens drei Bedienelemente (18), vorzugsweise wenigstens sechs Bedienelement (18), besonders bevorzugt wenigstens acht Bedienelemente (18), aufweist,
oder/und wobei die Steuervorrichtung (10; 10c, 10d) einen Notaus (22) umfasst, welcher insbesondere an dem Basiskörper (16) ausgebildet ist.

9. Steuervorrichtung (10; 10c, 10d) nach einem der vorhergehenden Ansprüche, wobei die Steuervorrichtung (10; 10c, 10d) über die Signalschnittstelle (20) oder eine eigens dafür vorgesehene Anschlusseinheit mit einer Anzeigeeinheit (140) verbindbar ist, um die erzeugten spezifischen Steuersignale in Form von Betriebsparametern auf der Anzeigeeinheit (140) anzuzeigen.

10. Steuervorrichtung (10; 10c, 10d) nach einem der vorhergehenden Ansprüche, wobei über den Befestigungsabschnitt (24) des Basiskörpers (16) mindestens eine Lageeinstellung der Steuervorrichtung (10; 10c, 10d) relativ zu einer Ausgangsposition in dem Innenraum eines Arbeitsfahrzeugs (120) ermöglicht ist, wobei die Lageeinstellung ausgewählt ist aus
- Einstellung einer Winkelposition der Steuervorrichtung (10; 10c, 10d),
- Einstellung einer Position der Steuervorrichtung (10; 10c, 10d) entlang einer Längsrichtung (A-A),
- Einstellung einer Position der Steuervorrichtung (10; 10c, 10d) entlang einer Querrichtung (B-B),
und wobei der Befestigungsabschnitt (24) des Basiskörpers (16) vorzugsweise dazu eingerichtet ist, die Steuervorrichtung (10; 10c, 10d) an einer Armschiene (26) in dem Innenraum eines Arbeitsfahrzeugs (120) zu befestigen, und die Winkelposition, die Position entlang der Längsrichtung (A-A) sowie die Position entlang der Querrichtung (B-B) der Steuervorrichtung (10; 10c, 10d) relativ zu der Armschiene (26) vorzugsweise einstellbar ist.

11. Steuervorrichtung (10; 10c, 10d) nach Anspruch 10, wobei die Winkelposition der Steuervorrichtung (10; 10c, 10d) über einen Bereich von ± 20° bis ± 40°, vorzugsweise um ± 35°, relativ zu der Ausgangsposition in dem Innenraum des Arbeitsfahrzeugs (120) einstellbar ist,
oder/und wobei die Position der Steuervorrichtung (10; 10c, 10d) entlang der Längsrichtung (A-A) über einen Bereich von 20 mm bis 40 mm, vorzugsweise um 30 mm, relativ zu der Ausgangsposition in dem Innenraum des Arbeitsfahrzeugs (120) einstellbar ist,
oder wobei die Position der Steuervorrichtung (10; 10c, 10d) entlang der Querrichtung (B-B) über einen Bereich von 20 mm bis 50 mm, vorzugsweise um 35 mm, relativ zu der Ausgangsposition in dem Innenraum des Arbeitsfahrzeugs (120) einstellbar ist.

12. Fahrzeugsteuersystem (100c, 100d) zum Steuern eines mit einem Arbeitsfahrzeug (120) gekoppelten Arbeitsgerätes (110), umfassend:
- eine Steuervorrichtung (10; 10c, 10d) nach einem der vorhergehenden Ansprüche,
- ein Arbeitsgeräte-Steuergerät (130b), welches dafür eingerichtet ist, Steuersignale von der Steuervorrichtung (10; 10c, 10d) zu empfangen und darauf basierend Arbeitsgeräte (110) anzusteuern, die mit dem Arbeitsfahrzeug (120) gekoppelt sind, wobei das Arbeitsgeräte-Steuergerät (130b) extern von der Steuervorrichtung (10; 10c, 10d) angeordnet ist und mit der Steuervorrichtung (10; 10c, 10d) über eine physische Verbindung oder über eine drahtlose Verbindung zur Übertragung von Steuersignalen verbunden ist.

13. Fahrzeugsteuersystem (100c, 100d) nach Anspruch 12, ferner umfassend eine Fahrzeugschnittstelle, welche zur Datenkommunikation mit einem im Arbeitsfahrzeug (120) integrierten Fahrzeug-Steuergerät (130a) zur Steuerung des Arbeitsfahrzeugs (120), insbesondere zur Steuerung von in dem Arbeitsfahrzeug (120) fest integrierten Fahrzeugkomponenten, eingerichtet ist.

14. Fahrzeugsteuersystem (100c, 100d) nach Anspruch 13, wobei die Fahrzeugschnittstelle Teil der Steuervorrichtung (10; 10c, 10d) ist und an dem Ausgang des Gateways (50) bereitgestellt ist, oder/und wobei die Fahrzeugschnittstelle Teil des Arbeitsgeräte-Steuergerätes (130b) ist,
oder wobei die Fahrzeugschnittstelle extern von der Steuervorrichtung (10; 10c, 10d) angeordnet ist und mit der Steuervorrichtung (10; 10c, 10d) über eine physische Verbindung oder über eine drahtlose Verbindung zur Übertragung von Steuersignalen verbunden ist, oder/und wobei die Fahrzeugschnittstelle extern von dem Arbeitsgeräte-Steuergerät (130b) angeordnet ist und mit dem Arbeitsgeräte-Steuergerät (130b) über eine physische Verbindung oder über eine drahtlose Verbindung zur Übertragung von Steuersignalen verbunden ist.

15. Fahrzeugsteuersystem (100c, 100d) nach einem der Ansprüche 12 bis 14, wobei das Fahrzeugsteuersystem (100c, 100d) dafür eingerichtet ist, Anzeigeansteuerungssignale zur Ansteuerung einer Anzeigeeinheit (140) des Arbeitsfahrzeugs (120) über die Fahrzeugschnittstelle an das Fahrzeug-Steuergerät (130a) zu übertragen, um das Fahrzeug-Steuergerät (130a) dazu anzuweisen, eine Bildinformation an der Anzeigeeinheit (140) anzuzeigen.
